(19)

Europäisches
Patentamt

European
Patent Office

Office européen
des brevets

(11)     **EP 3 493 052 A1**

(12)                          **EUROPEAN PATENT APPLICATION**

(43) Date of publication:
**05.06.2019   Bulletin 2019/23**

(51) Int Cl.:
*G06F 8/30* (2018.01)
*G06F 9/48* (2006.01)
*H04L 12/851* (2013.01)
*H04L 29/06* (2006.01)

(21) Application number: **18203901.6**

(22) Date of filing: **31.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **03.12.2017   US 201715829938**

(71) Applicant: **Intel Corporation
Santa Clara, CA 95054 (US)**

(72) Inventors:
• **WANG, Ren
  Portland, OR 97229 (US)**
• **TSENG, Janet
  Portland, OR 97229 (US)**
• **TSAI, Jr-Shian
  Portland, OR 97229 (US)**
• **TAI, Tsung-Yuan
  Portland, OR 97229 (US)**

(74) Representative: **Rummler, Felix
Maucher Jenkins
26 Caxton Street
London SW1H 0RJ (GB)**

(54)     **ARCHITECTURE AND MECHANISMS TO ACCELERATE TUPLE-SPACE SEARCH WITH INTEGRATED GPU**

(57)     Methods, apparatus, systems, and software for architectures and mechanisms to accelerate tuple-space search with integrated GPUs (Graphic Processor Units). One of the architectures employs GPU-side lookup table sorting, under which local and global hit count histograms are maintained for work groups, and sub-tables containing rules for tuple matching are re-sorted based on the relative hit rates of the different sub-tables. Under a second architecture, two levels of parallelism are implemented: packet-level parallelism and lookup table-parallelism.

Under a third architecture, dynamic two-level parallel processing with pre-screen is implemented. Adaptive decision making mechanisms are also disclosed to select which architecture is optimal in view of multiple considerations, including application preferences, offered throughput, and available GPU resources. The architectures leverage utilization of both processor cores and GPU processing elements to accelerate tuple-space searches, including searches using wildcard masks.

*Fig. 9a*

EP 3 493 052 A1

**EP 3 493 052 A1**

**Description**

BACKGROUND INFORMATION

During the past decade, there has been tremendous growth in the usage of so-called "cloud-hosted" services. Examples of such services include e-mail services provided by Microsoft (Hotmail/Outlook online), Google (Gmail) and Yahoo (Yahoo mail), productivity applications such as Microsoft Office 365 and Google Docs, and Web service platforms such as Amazon Web Services (AWS) and Elastic Compute Cloud (EC2) and Microsoft Azure. Cloud-hosted services are typically implemented using data centers that have a very large number of compute resources, implemented in racks of various types of servers, such as blade servers filled with server blades and/or modules and other types of server configurations (e.g., 1U, 2U, and 4U servers).

Deployment of Software Defined Networking (SDN) and Network Function Virtualization (NFV) has also seen rapid growth in the past few years. Under SDN, the system that makes decisions about where traffic is sent (the control plane) is decoupled for the underlying system that forwards traffic to the selected destination (the data plane). SDN concepts may be employed to facilitate network virtualization, enabling service providers to manage various aspects of their network services via software applications and APIs (Application Program Interfaces). Under NFV, by virtualizing network functions as software applications, network service providers can gain flexibility in network configuration, enabling significant benefits including optimization of available bandwidth, cost savings, and faster time to market for new services.

Along with SDN and NFV, the new trends propel the need for high-speed software-based packet processing on standard high volume servers, including virtual switches for VM (Virtual Machine) communications. Currently many cloud services implement Open vSwitch (OvS) as the default virtual switch.

Native OvS forwards packet via an operating system (OS) kernel space data-path (fast-path), with exception packets sent to the userspace daemon for "slow-path" processing from which studies show that OvS incurs significant packet processing overhead. To improve the performance, a new version of OvS integrates INTEL® Corporation's Data Plane Development Kit (DPDK), which is a set of userspace libraries and user-mode NIC (Network Interface Controller) drivers enabling optimized packet processing on general purpose INTEL® x86 architecture machines. OvS-DPDK completely bypasses the OS kernel stack, and executes both fast-path and slow-path in userspace. This helps to improve the achievable throughput, which otherwise was limited by the forwarding bandwidth of the Linux kernel network stack. However, on a general-purpose platform, OvS-DPDK often requires multiple cores just for packet switching to maintain high throughput, leaving applications less CPU resources for useful work.

Meanwhile, GPUs (Graphic Processing Units) have emerged as a promising candidate for offloading network packet processing workloads from the CPU in order to achieve higher full-system performance and freeing more CPU cycles for other application services, e.g., packet forwarding, Secure Sockets Layer (SSL) encryption/decryption, and regular expression matching in intrusion detection systems. Most of the existing approaches have focused on designing offloading architecture for platforms having discrete GPUs, which often requires large batches of packets to amortize the high CPU-GPU communication latency over the communication channel between the CPU and GPU, such as Peripheral Component Interconnect Express (PCIe™).

BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:

Figure 1 is a diagram illustrating an example of a conventional tuple space search with wildcard support;

Figure 2 is a schematic diagram illustrating a GPU accelerated packet processing framework under which a CPU and GPU integrated on the same processor System on a Chip (SoC) access shared memory;

Figure 3 is a schematic diagram illustrating an example of a tuple search scheme using packet-level parallelism;

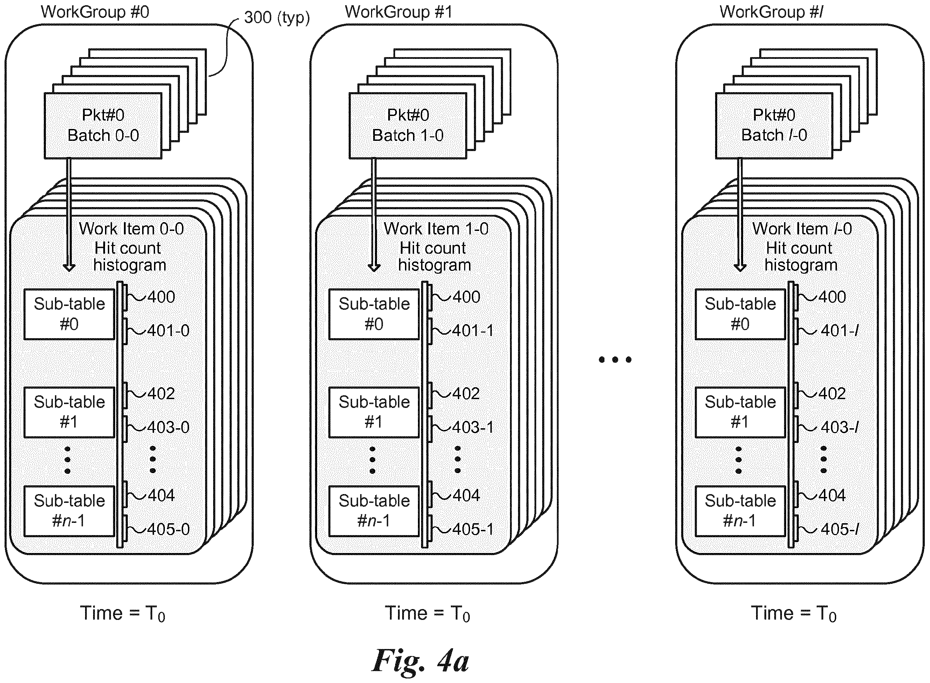

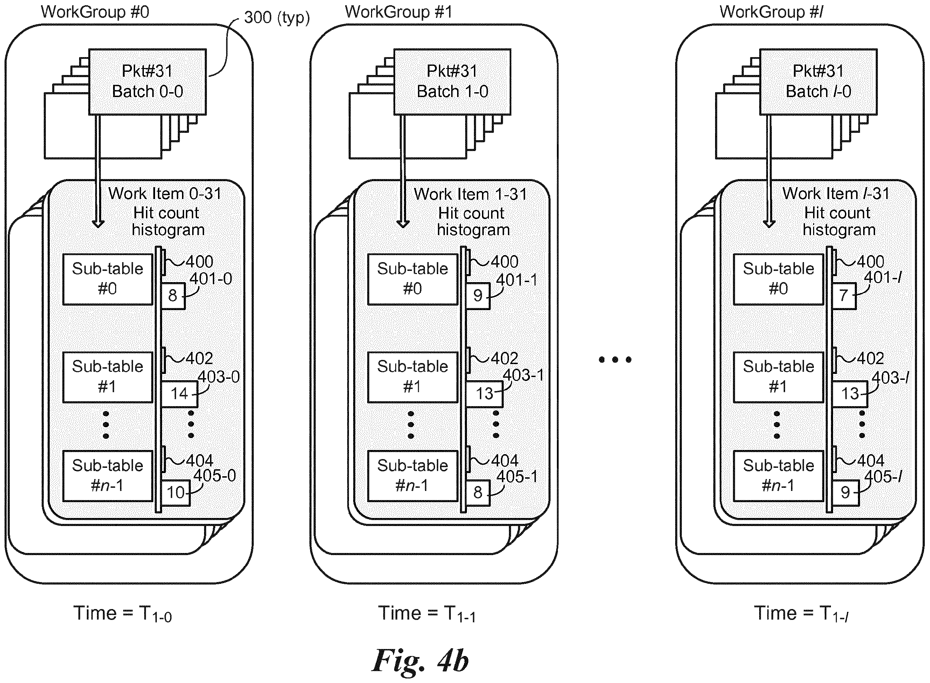

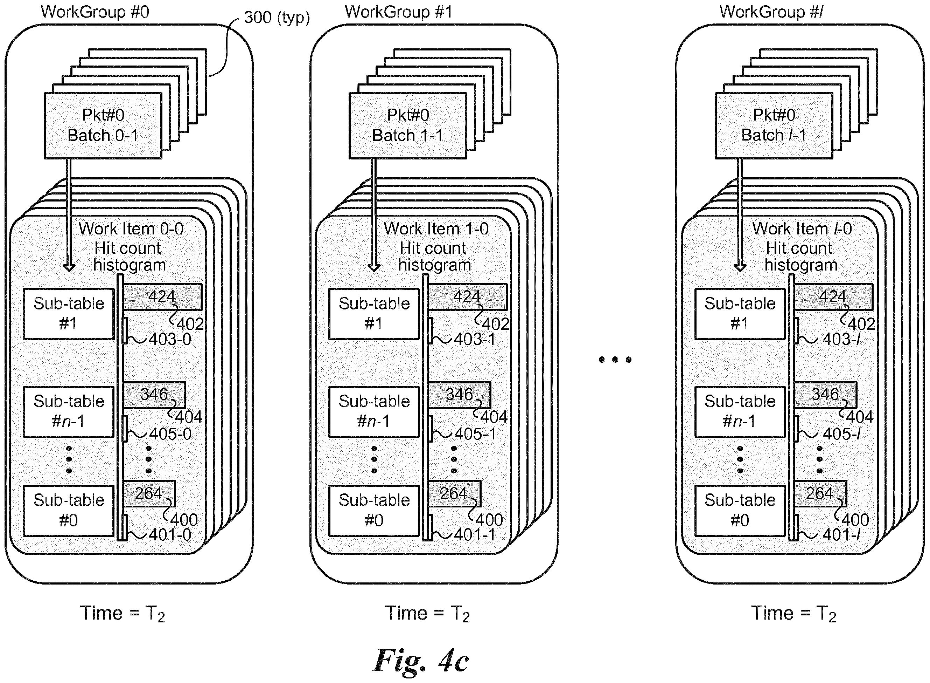

Figures 4a-4c are schematic diagrams illustrating an embodiment of a first architecture using an integrated CPU to accelerate tuple space searching employing GPU-side sub-table sorting through use of hit-count histograms, wherein Figure 4a shows the state of local and global hit-count histograms for multiple work groups at an initial states, Figure 4b shows the state of the local and global hit-count histograms for the work groups after a first batch of packets has been processed by each work group, and Figure 4c shows the state of the local and global hit-count histograms for the work groups after the global hit-count histograms have been updated and the sub-table search order has been re-sorted;

Figure 5a is a schematic diagram illustrating a first embodiment of a two-level (packet and lookup table) parallelism architecture under which each work item processes a single packet and searches multiple, non-overlapping sub-tables;

Figure 5b is a schematic diagram illustrating a second embodiment of a two-level parallelism architecture under which each work item processes a single packet and searches a single sub-table;

Figure 5c is a schematic diagram illustrating a third embodiment of a two-level parallelism architecture under which each work item processes a single packet and searches four non-overlapping sub-tables;

Figure 5d is a schematic diagram illustrating a fourth embodiment of a two-level parallelism architecture under which each work item processes two packet and searches multiple non-overlapping sub-tables;

Figure 6 is a schematic diagram of an architecture illustrating aspects of a dynamic two-level parallel processing with pre-screening scheme, according to one embodiment;

Figures 7a-7c illustrate how a Bloom filter employing multiple hash algorithms and a single-dimension bit vector operates;

Figures 8a-8c illustrate how a Bloom filter employing multiple hash algorithms and respective bit vectors operates;

Figure 9a and 9b are diagrams illustrating an example of a tuple space search with wildcard support implemented using a dynamic two-level parallel processing scheme utilizing Bloom filters for pre-screening, according to one embodiment;

Figure 9c is a diagram illustrating an example of a tuple space search with wildcard support implemented using a dynamic two-level parallel processing scheme utilizing a Vector of Bloom filters for pre-screening, according to one embodiment;

Figure 10 is a schematic diagram illustrating a four-way Cuckoo hash table embodied as a two-way (hash) function, four-way association lookup table;

Figure 11 is a block diagram illustrating a dynamic two-level parallel processing scheme utilizing a Cuckoo Distributor for pre-screening, according to one embodiment;

Figure 12 illustrates an entry format of a Cuckoo Distributor, according to one embodiment;

Figure 13 is a block diagram illustrating implementation of an adaptive decision making scheme, according to one embodiment;

Figure 14 is a flowchart illustrating operations and logic corresponding to an embodiment of an exemplary adaptive selection algorithm;

Figure 15 is a flow diagram of an API used to support active packet workflow, according to one embodiment;

Figure 16 is a schematic diagram of a platform hardware and software architecture configured to implement aspects of the embodiments disclosed herein;

Figure 17 is a schematic diagram of an exemplary processor with an integrated GPU, according to one embodiment; and

Figure 18 is a bar graph illustrating some preliminary performance results comparing the performance of a general OvS implementation, OvS combined with Cuckoo Distributor, and OvS combined with integrated GPU;

DETAILED DESCRIPTION

Embodiments of methods, apparatus, systems, and software for architectures and mechanisms to accelerate tuple-space search with integrated GPUs (Graphic Processor Units) are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

Software-based network packet processing on commodity servers promises better flexibility, manageability, and scalability, thus gaining tremendous momentum in recent years. However, without specialized hardware, such as Ternary Content-Addressable Memory (TCAM), certain important workloads such as flow classification and Access Control List (ACL) take up significant amount of CPU cycles. Meanwhile, CPU's with integrated GPUs, residing on the same die with the CPU, offer many advanced features such as on-chip interconnect CPU-GPU communication, and shared physical/virtual memory, offers a viable alternative to accelerate CPU-only packet processing.

Flow classification with wild card support is a common and critical stage for many software packet processing workloads. As discussed in Pfaff, Ben, et al. "The Design and Implementation of Open vSwitch." NSDI. 2015, Tuple Space based search, (e.g., used on Open vSwitch) is very efficient to support large and complex rule sets. In general, with tuple space search, the rules (e.g., Open Flow rules, IPv4 rules, etc.) are divided into a series of sub-tables based on their wildcard format. All rules with the same wildcard positions are placed in the same sub-table. Tuple space search then sequentially searches through all the sub-tables until a match is found. This process could be inefficient, especially when the workload involves a large number of sub-tables (as shown with experimental results presented below).

In accordance with aspects of the embodiments disclosed herein, architectures and mechanisms to accelerate tuple-space search with integrated GPU are provided. The architectures and mechanisms includes packet-level parallelism utilizing GPU side real-time lookup table sorting schemes to effectively reduce the search space and improve efficiency, two-level parallelism on both packet level and sub-table level to maximize the parallel search speed, and techniques to exploit device side enqueue capability from OpenCL2.0 to dynamically launch threads required after a pre-screening process. In addition, an adaptive scheme to dynamically switch to the most suitable processing model is also disclosed.

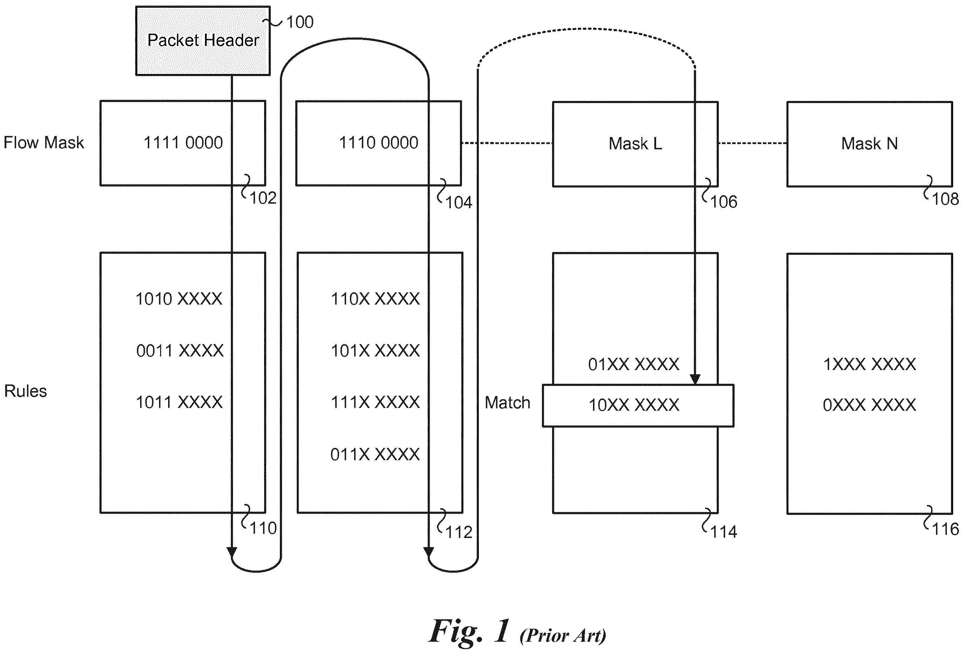

Utilization of tuple space has been shown to be an efficient method to perform flow classification in software with wild card support. Hence it is used widely, including OvS Virtual Switch, as illustrated in Figure 1. Under this conventional approach tuple data in a packet header 100 is processed using a plurality of flow masks 102, 104, 106, and 108, and a plurality of rules 110, 112, 114, and 116. As shown, the tuple search, which is based on data contained in selected fields in packet header 100 (tuple data/fields) is performed in a sequential manner until a matching rule is found. The packet flow is then classified based on the matching rule.

Under one approach, each sub-table is implemented as a hash table, such as a Cuckoo hash table in OvS. (See description of Cuckoo hashing below.) When a packet comes in, a sub-table key is formed based on the first sub-table mask to perform a hash lookup for this sub-table. The process continues for each of the sub-tables until a match is found, or there is a miss.

The overhead of this approach comes from two aspects: 1) a sequential search over multiple sub-tables; and 2) for each sub-table, a sub-key need to be formed based on the sub-table mask. The second overhead could be significant when the header is very long. For example, Open Flow headers in OvS are 512 bytes.

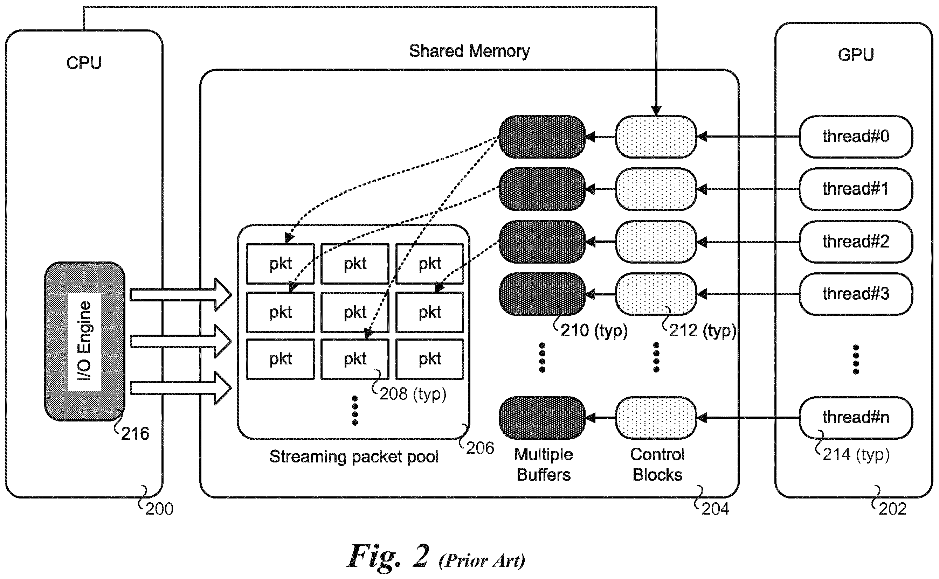

Under aspects of the embodiments disclosed herein, tuple searching over multiple sub-tables is done in parallel using an integrated GPU. The general architecture for packet processing with integrated GPU can effectively take advantage of persistent thread and multi-buffering technique to continuously send packets to GPU for processing, without having to re-launch the kernel or requesting big batches to hide latency. For example, one approach for performing packet processing with an integrated GPU is discussed in Tseng, Janet, et al. "Exploiting integrated GPUs for network packet processing workloads." NetSoft Conference and Workshops (NetSoft), 2016 IEEE. IEEE, 2016. The GPU accelerated packet processing framework for this paper is shown in Figure 2.

As illustrated, the framework includes a CPU 200 and a GPU 202, each having access to shared memory 204. The shared memory includes a streaming packet pool 206 including multiple packets 208, as well as multiple buffers 210, and control blocks 212. GPU 202 is further depicted as including multiple threads 214 that are used to process packets 208 through use of control blocks 212 and buffers 210. CPU 200 is also enabled to operate on packets 208 using an I/O engine 216.

The high-level packet execution flow in the framework is similar to many existing GPU-based packet processing work where CPU cores perform network I/O tasks and pass the data to GPU for lookup. The paper introduced two new features that help reducing latency significantly: (i) Continuous Thread, which eliminates the need to launch a GPU kernel thread for every batch, and (ii) a multi-buffering technique, which allows efficient latency hiding to maximize GPU utilization.

For the GPU accelerated packet processing framework design, the INTEL® DPDK was used to directly access the NIC from user space, bypassing kernel stack overheads. Continuous Thread enables launching GPU threads one time and continuously processing incoming packets until an application initiates a termination call. Continuous Thread differs from "persistent thread" used in discrete GPU in the sense that the persistent thread processes work-items from a global work pool and terminates itself once the work pool is exhausted. This model is similar to a "batching" technique, but prevents the GPU from starvation via software scheduling. However, this method does not address the latency problem for typical latency-sensitive producer-consumer applications, such as network packet processing, due to the lack of instant interaction between the CPU and GPU. On the other hand, the Continuous Thread can process the continuous streaming data without batching a large work pool, hence improving the latency performance. In our model, the working thread continuously processes new stream-in data until the application initiates a termination call, making it truly persistent. Similarly, the host application (CPU) could immediately process the GPU output without waiting for the remaining work in the pool to be finished. With multiple buffers, the CPU as the producer continuously replenishes the buffers that are ready to be used while the GPU as the consumer is processing the newly filled buffer.

Execution Model/Terminology

In some embodiments, the architectures described herein are implemented through use of the OpenCL Execution Model. Accordingly, OpenCL terminology is used herein. However, it will be understood that the teachings and principles disclosed herein are not limited to OpenCL implementations, but rather OpenCL terminology is used since this terminology has a well-known meaning in the art.

OpenCL Execution of an OpenCL program occurs in two parts: *kernels* that execute on one or more OpenCL *devices* and a host program that executes on the host. The host program defines the context for the kernels and manages their execution. The core of the OpenCL execution model is defined by how the kernels execute. When a kernel is submitted for execution by the host, an index space is defined. An instance of the kernel executes for each point in this index space. This kernel instance is called a *work-item* (also referred to herein as a "work item") and is identified by its point in the index space, which provides a global ID for the work-item. Each work-item executes the same code but the specific execution pathway through the code and the data operated upon can vary per work-item. Work-items are organized into *work-groups* (also referred to herein as a work group or Workgroup). The work-groups provide a more coarse-grained decomposition of the index space. Work-groups are assigned a unique work-group ID with the same dimensionality as the index space used for the work-items. Work-items are assigned a unique local ID within a work-group so that a single work-item can be uniquely identified by its global ID or by a combination of its local ID and work-group ID. The work-items in a given work-group execute concurrently on the processing elements of a single compute unit. Examples of compute units are GPU Execution Units (EUs) and CPU cores. More generally, the EUs on the GPUs described and illustrated herein are processing elements that enable the GPU, via execution of instructions on the processing elements, to perform corresponding operations described and illustrated herein.

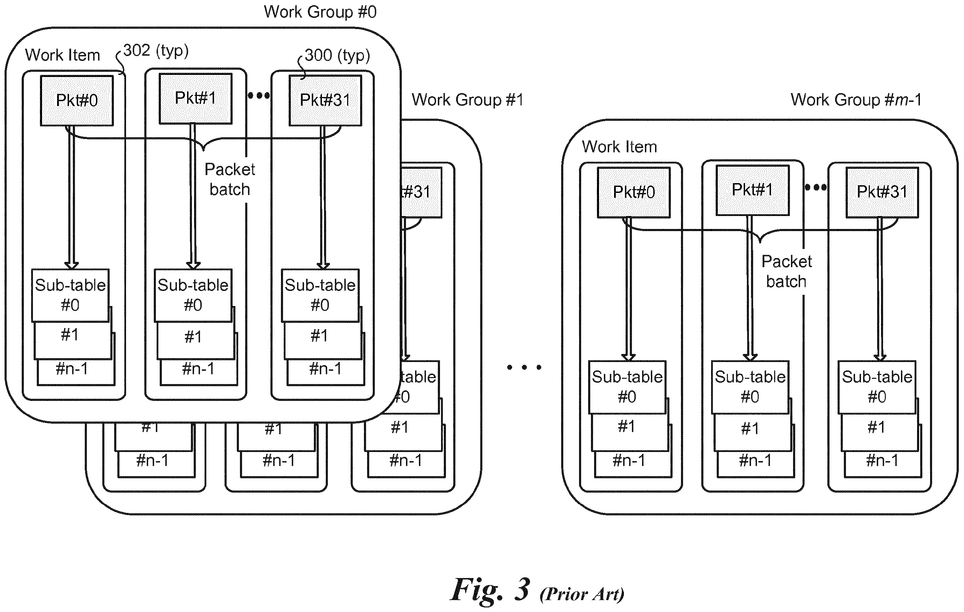

Generally, with tuple space search, the rule for the packet may be found in any of the multiple sub-tables. The most straightforward solution is to perform packet level parallelism as shown in Figure 3. In this example, the work is partitioned into $m$ work groups 0 through $m$-1, each of which consists of a batch of packets 300 that are processed as work-items 302, with each work-item depicted as including a packet and $n$ sub-tables. Under this approach, the batch of packets in each workgroup are processed (possibly) using all of the $n$ sub-tables (accessed as lookup tables) serially and terminate the search as soon as the entry is found. However, this solution may suffer low performance and relatively longer delay as each EU sequentially searches through all the sub-tables until the rule is found for a packet.

Architectures and Mechanisms of Using Integrated GPU to Accelerate Tuple Space Searches

Architecture 1: GPU-side Lookup Table Sorting for Efficient Lookup

As discussed above, with tuple space search the rule for the packet may be found in any of the multiple sub-tables, such as shown in Figure 3. However, random search through all sub-tables may suffer low performance and long delay. Real world traffic usually exhibit traffic skewness, i.e., some sub-tables are hit (have tuple matches) more often than others.

Based on this observation and in accordance with aspects of some embodiments, the packet-level parallelism processing approach is optimized by applying GPU-side table sorting. In this scheme, a hit count histogram of each sub-table is maintained at the GPU side, which, under one embodiment, re-sorts the sub-tables (via continuous GPU threads) as when processing of a batch (or multiple batches across work groups) is completed. In one embodiment, in order to be more efficient, the histogram is not updated for each packet. Rather, each thread keeps a bitmap for the table hit count for the batch. After the batch processing is done, the thread is responsible to update the total table (global) hit count histogram and reset its local bitmap. Periodically, the table search sequence is updated based on the current hit count totals of the global hit count histogram.

An exemplary implementation of this approach is illustrated in Figures 4a-4c. As before (e.g., with Figure 3), there are $m$ work groups, depicted here as WorkGroup #0, #1, ... #$l$, each of which processes a batch of packets 300, beginning with a first packet depicted as Pkt#0 of a first batch, respectively shown as Batch 0-0, Batch 1-0, and Batch $l$-0. Two hit count histogram bars are depicted for each of $n$ sub-tables 0 *through* $n$-1, wherein the upper histogram bar represents the global hit count (e.g., for all of the work groups) and the lower histogram bar represents the local hit count (for the individual work group). In Figures 4a-4c, the global hit counts are depicted by histogram bars 400 for Sub-table #0, histogram bars 402 for Sub-table #1, and histogram bars 404 for Sub-table #$n$-1. The local hit counts are depicted by similar histogram bars 401-$i$ for Sub-table #0, histogram bars 403-$i$ for Sub-table #1, and histogram bars 405-$i$ for Sub-table #$n$-1, wherein '$i$' represents the WorkGroup #. In the illustrations in Figures 4a-4c, the width of the histogram bars are roughly proportional to the hit count for the respective sub-tables, noting that the scale used for the local hit counts is greater than that used for the global hit counts. The numbers in the histogram bars represent the exemplary hit count values.

Three timeframes are shown in Figure 4a-4c: $T_0$, $T_1$, and $T_2$. Time $T_0$ is an initial state under which no packets have been processed for each of WorkGroup #0, #1, ... #$l$. At this state, the histogram bars (both global and local) all have a hit count of '0'. As the packets for WorkGroup #0, #1, ... #$l$ are processed, a hit count is incremented for each of the $n$ sub-tables 0 *through* $n$-1 when that table is hit (i.e., there is a tuple match with a rule in that sub-table).

The state after the first batch of packets has been processed by WorkGroup #0 is shown at time $T_{1-0}$ in Figure 4b. As illustrated, the hit count depicted for histogram bar 400-0 for Sub-table #0 is 8, the hit count depicted for histogram bar 403-0 is 14, and the hit count depicted for histogram bar 405 for Sub-table #$n$-1 is 10. Similar hit counts and histogram bars are depicted for each of Sub-table #0, #1, and #$n$-1 are depicted at a time of $T_{1-0}$ for WorkGroup #0, and a time $T_{1-l}$ for WorkGroup #$l$. As further illustrated, the hit counts for the same sub-tables in the different work groups may be different.

Two considerations are of note. First, for illustrative purposes, Figure 4b shows completion of processing the last packet (Pkt#31) in each batch for each of WorkGroup #0, #1, ... #$l$. In practice, processing of the packets in a batch of packets for a given work group is performed (substantially) in parallel, with each work item in the work group processing a respective packet (under the illustrated embodiment in Figures 4a-4c). Depending on when the kernel for each work item is launched and how many sub-tables need to be searched for a given packet, the order of completion of the packets for a given batch is unpredictable. Accordingly, times $T_{1-0}$, $T_{1-1}$, and $T_{1-l}$ are actually representative of when the processing all packets in a batch is completed, rather than any particular packet. Second, the reason $T_{1-0}$, $T_{1-1}$, and $T_{1-l}$ have different labels (i.e., not all $T_1$), is because the processing of packets in the work groups is not synchronized. Thus, each of WorkGroup #0, #1, ... #$l$. proceeds at its own pace, irrespective of the pace of the other work groups.

As discussed above, after a batch has been processed, the thread for the work group updates the total table (i.e., global) hit count histogram and resets its local bitmap. Additionally, the table search sequence or search order is periodically updated (e.g., the search order is re-sorted) based on the current count values for the global hit count histogram, where there is a descending order from the highest total hit count to the lowest total hit count. The state of the hit counts for each of WorkGroup #0, #1, ... #$l$ after a first re-sort is depicted by time $T_2$ in Figure 4c. In this example, the order is based on the hit counts represented by histogram bar 402 (total hit count of 424), histogram bar 404 (total hit count of 346) ... and histogram bar 400 (total hit count of 264). The local hit counts for each of the sub-tables have been reset to zero. As before, the histogram bars remain paired with their original sub-tables, such that Sub-table #0 remains paired with histogram bars 400 and 401-$i$, Sub-table #1 remains paired with histogram bars 402 and 403-$i$, and Sub-table #$n$-1 remained paired with histogram bars 404 and 405-$i$. As a result, the order of the sub-tables has been resorted for each of WorkGroup #0, #1, ... #$l$.

It will be further recognized that the use of time $T_2$ in Figure 4c for each work group is for illustrative purposes and ease of understanding. In practice, the timing of when the sub-table search order for individual work groups is re-sorted may be asynchronous, of, if synchronized, the state of processing for each work group may differ from the other work groups. For example, under one embodiment of an asynchronous approach, each work group keeps its own sub-table search order locally, and that search order is updated following the work group thread updating the global hit count histogram. Under one embodiment of a synchronous approach, there is a global search order used by all of the work groups, resulting in a change to the search order (for all work groups) whenever the global search order is re-sorted.

In one embodiment, a single row of a table, referred to as a bitmap, is used to store the local hit counts. Meanwhile, the total hit counts across the work groups is stored in a similar bitmap that is globally accessed and updated by all of the work groups (via execution of the work group threads, as discussed above). For illustrative purposes and ease of understanding, Figures 4a-4c depict global histograms for each of WorkGroup #0, #1, ... #$l$. In practice, it will be recognized that it is more likely that a single instance of the global hit count histogram will be stored, rather than a copy of the global histogram stored locally for individual work groups.

Architecture 2: Two-level (packet and lookup table) parallelism

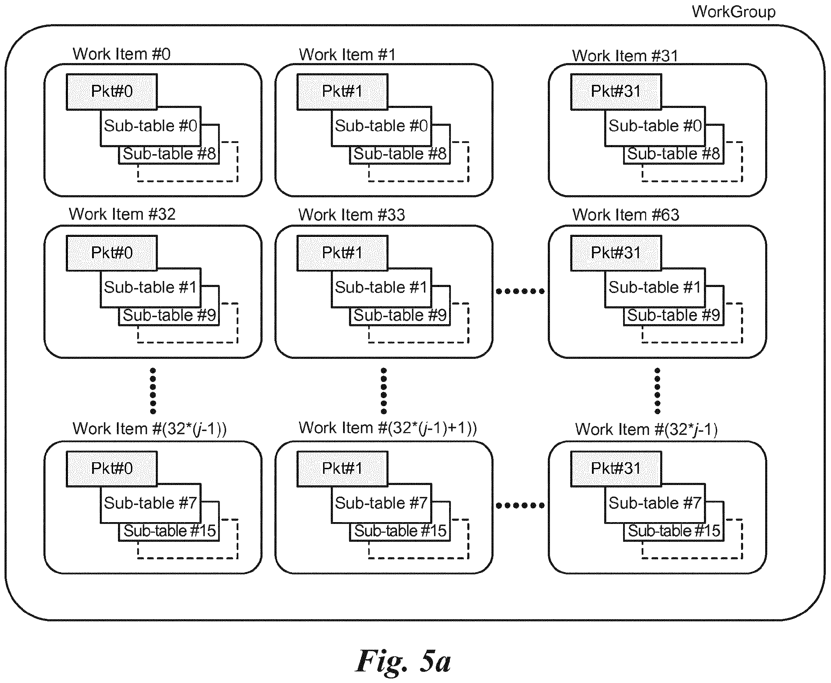

Under a second approach, two levels of parallelism are used: packet-level parallelism and lookup table-parallelism. Under packet-level parallelism, each EU searches through all of its sub-tables until a match is found (or not found in any of the sub-tables). For each packet, the sequential search may cause longer delay than desired, especially when there are many sub-tables. To improve this, the number of parallel processing work-items is increased by expanding all the independent searches of packet-sub-table pairs in parallel, as illustrated in Figures 5a-5d.

In Figures 5a-5d, all packets (32 in these examples) in the same batch are assigned to the same workgroup, while multiple work-items search through the tables in parallel. The results are synchronized at workgroup level, while the work on the different work-items may be asynchronous.

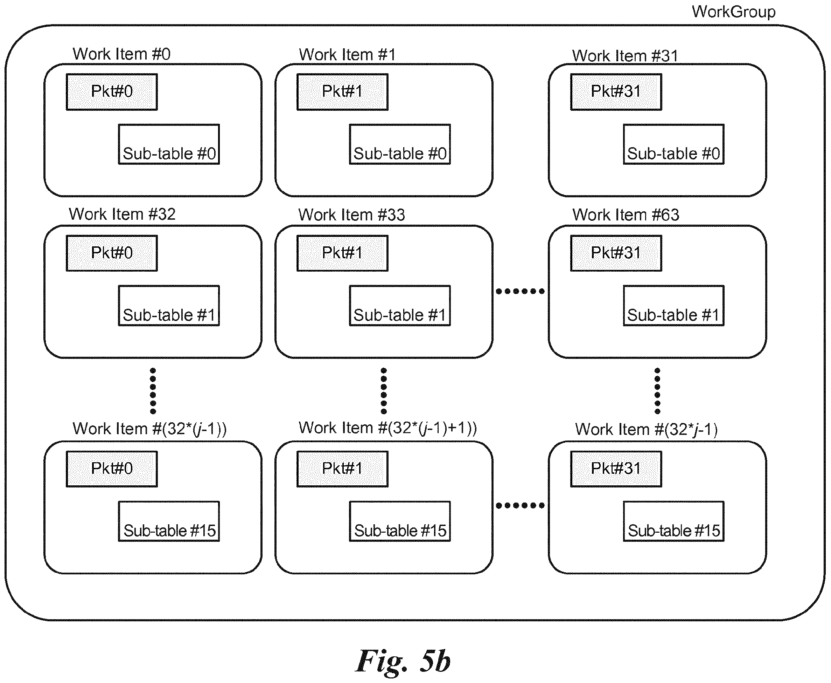

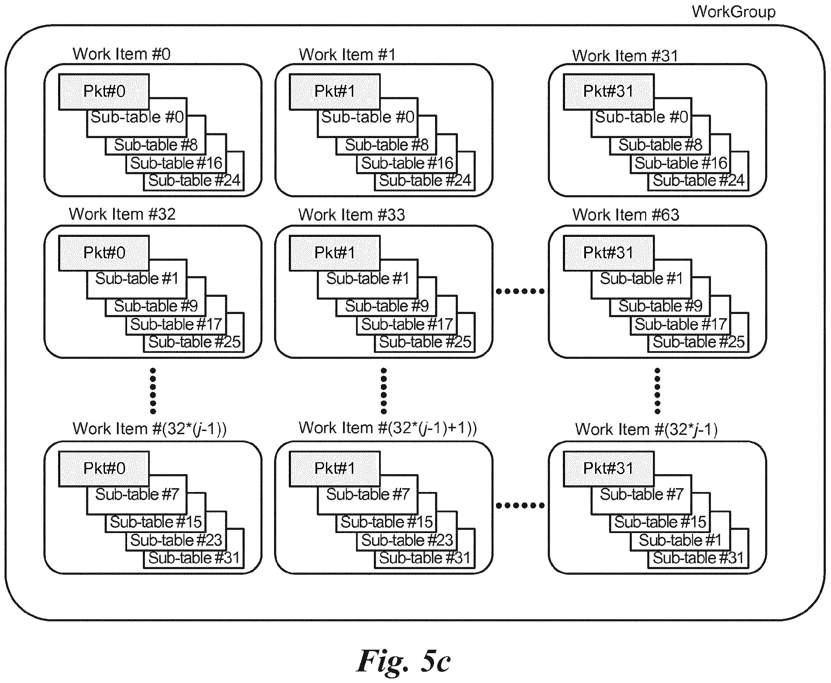

Under the embodiment of Figure 5a, each work-item processes a single packet using one or more sub-tables (two sub-tables are shown in Figure 5a). In the embodiment of Figure 5b, each work-item processes a single packet using a single sub-table, illustrating a maximum level of parallelism. In Figure 5c, there are 32 sub-tables, with each work-item processing a single packet using four of the 32 sub-tables.

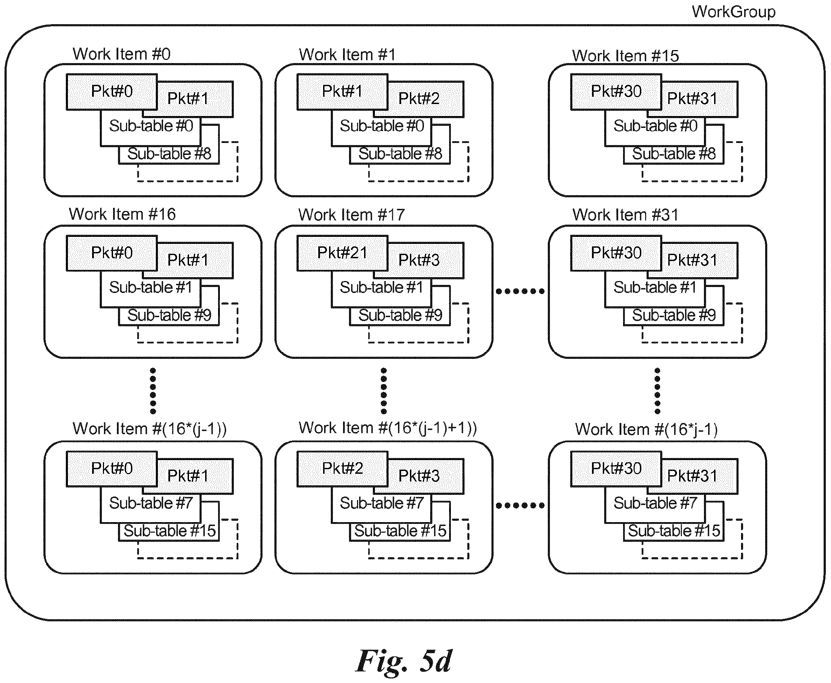

In addition to having each work-item work on a single packet, the work-items may work on multiple packets, which reduces the number of columns in the work-item matrices. For example, in Figure 5d, each work-item works on two packets.

Generally, the value for $j$ in Figures 5a-5d is equal to the number of sub-tables divided by the number of sub-tables searched by each work-item. In the examples illustrated in Figure 5a, there are a total of 16 sub-tables, with two sub-tables per work-item, and thus $j=8$. In Figure 5b, $j=16$, while in each of Figures 5c and 5d $j=8$ again.

It is noted that the methodology and work group matrix configuration may need to comply with a vendor restriction on a maximum work-item per work-group upper limit, meaning, not every packet-sub-table pair could be fully distributed to all compute resources (such as shown in Figure 5b).

In consideration of this vendor restriction, the number of sub-tables that needs to be processed in each work-item can be calculated as:

$$m = n \text{ (total number of sub-tables)}/k \text{ (maximum work-item per workgroup)}$$

Architecture 3: Dynamic two-level parallel processing with pre-screening schemes and device side enqueue

Under another approach, the OpenCL 2.0 device-side enqueue capability is exploited to overcome the potential vendor restriction on the foregoing two-level parallelism scheme, as well as to minimize the memory access cost during table lookup. This third architecture implements dynamic two-level parallel processing with pre-screening technology. In this mechanism, a master thread is launched first to apply pre-screening to decide which sub-table (or sub-tables) to search for. Examples of pre-screening technologies include: Bloom filter, Vector of Bloom filters (VBF), and a Cuckoo Distributor, as described below. The architecture proposed herein allows flexible integration with different pre-screening technologies.

After using a pre-screening technology to determine which sub-tables to search into, the master thread then enqueues new kernels with desired dimension and sub-tables that passed the pre-screening. This master thread will then relaunch itself for the next batch while the newly enqueued kernels were processing the current batch for efficient pipelining.

This dynamic two-level parallel processing still takes advantages of multi-buffering and provides the flexibility to intelligently minimize the lookup table search. By doing this, the EUs that are needed for tuple space lookup can be minimized, saving other EUs potentially for other application tasks.

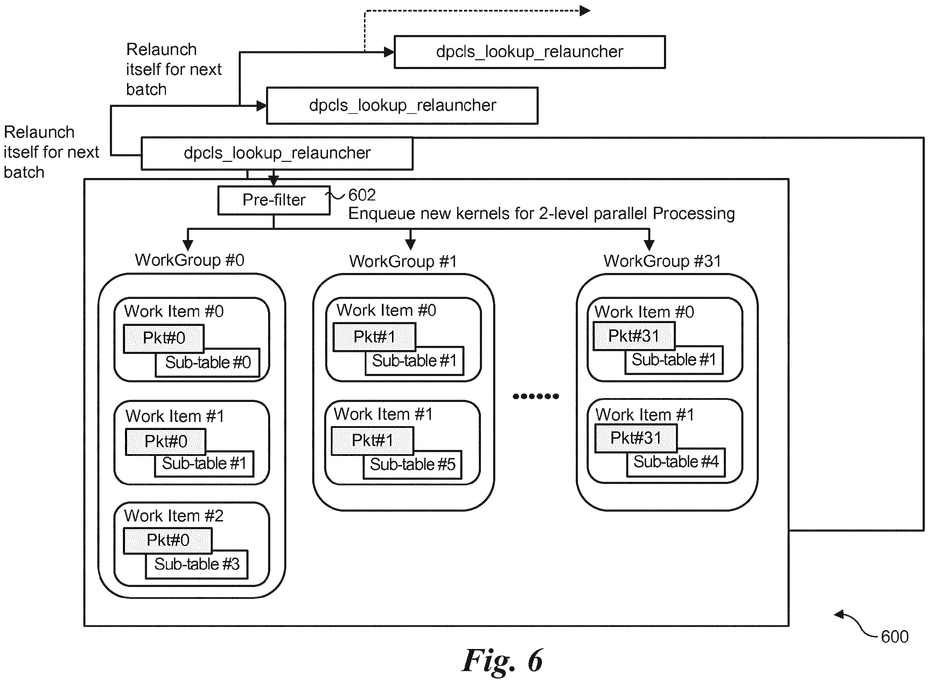

Figure 6 shows an architecture 600 illustrating aspects of one embodiment of dynamic two-level parallel processing with pre-screening. As shown in Fig. 6, a master thread is launched first to apply a pre-filter 602 such as Bloom filter for each packet, or multiple packets in parallel with vectorization. The Bloom filter is used to find the possible tuples that the packets can get a match from. The GPU then enqueues new GPU-kernels with desired dimension from sub-tables that passed the filter.

In further detail, Figure 6 depicts three work groups: WorkGroup #0, #1, and 31. Each work group is dynamically configured with sub-tables based on the pre-screening output of pre-filter 602. For example, WorkGroup #0 includes three sub-tables #0, #1, and #3, each associated with a respective work item, as depicted by Work Item #0, #1, and #2. This illustrates that as a result of the pre-screening operation performed by pre-filter 602 on a first packet (Pkt#0), there are the possible sub-tables containing rules that could match the tuple for Pkt#0. Similarly, the output of the pre-screening operation performed by pre-filter 602 on a first second (Pkt#1) depicts there are two sub-tables containing rules that could match the tuple for Pkt#1: Sub-table #1 and Sub-table #5. These two sub-tables are searched in parallel using respective Work Item #0 and #2. This processes is repeated for each packet in the batch, eventually processing the last packet (Pkt#31) (or whatever packet in a batch ends up being processed last), beginning with the pre-screening operation performed by pre-filter 602. The result of the pre-screening of Pkt#31 identifies two sub-tables with possible matching rules for the tuple of Pkt#31: Sub-table #1 and Sub-table #4.

This master thread will then relaunch itself for the next batch while the newly enqueued GPU-kernels are processing the current batch, with the cycle being repeated on an ongoing basis. This dynamic two-level parallel processing still incorporates the spirit of multi-buffering and Continuous Threads while providing the most flexibility to intelligently minimize the lookup table search, maximizes the amount of parallel processing, and fully utilizes all the compute resource.

Pre-processing with a Bloom Filter

Under one embodiment, a Bloom filter (or set of Bloom filters) is used for pre-screening packets. Under this technique, one or more Bloom filters may be used to perform a tuple filtering function under which the Bloom filter can be used to identify sub-tables that do not contain any matching tuple rules. As such, those sub-tables can be precluded for use during subsequent processing for a work group.

In further detail, a Bloom filter is a space-efficient data structure that is used to test probabilistically whether an element is a member of a set. The simplest form of Bloom filter employs a single hash algorithm that is used to generate bit values for a single row or column of elements at applicable bit positions, commonly referred to as a single-dimension bit vector. Another Bloom filter scheme employs multiple hash algorithms having bit results mapped to a single-dimension bit vector. Under a more sophisticated Bloom filter, the bit vectors for each of multiple hash algorithms are stored in respective bit vectors, which may also be referred to as a multi-dimension bit vector.

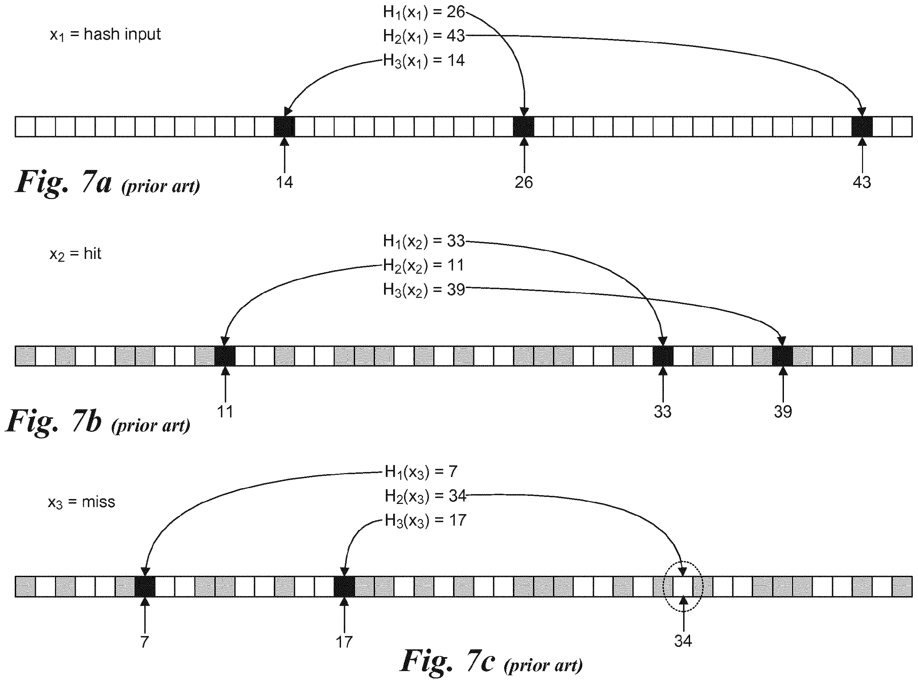

An example of a Bloom filter that is implemented using multiple hash algorithms with bit values mapped into a single-dimension bit vector is shown in Figures 7a-7c. In this example, there are three hash algorithms, depicted as $H_1(x)$, $H_2(x)$ and $H_3(x)$, where element x is the input value. For a given input $x_1$, the result for each of hash algorithms $H_1(x_1)$, $H_2(x_1)$ and $H_3(x_1)$ is calculated, and a corresponding bit is marked (*e.g.*, set to 1) at the bit position corresponding in the hash result. For example, as shown in Figure 7a, the result of hash function $H_1(x_1)$ is 26, $H_2(x_1)$ is 43, and $H_3(x_1)$ is 14. Accordingly, bits at positions 26, 43, and 14 are set (*e.g.*, the bit values are flipped from '0' (cleared) to '1' (set)). This process is then repeated for subsequent input $x_i$ values, resulting in the bit vector shown in Figure 7b, wherein the bits that are set are depicted in gray and black. Figure 7b also illustrates the result of a hit for input $x_2$ (bits depicted in black). A hit is verified by applying each of the Bloom filter's hash algorithms using $x_2$ as the input value (also referred to as a query for element $x_2$), and then confirming whether there is a bit set at the bit position for each hash algorithm result. For example, if there is a bit set for the position for each hash algorithm result, the outcome is a hit, meaning there is a high probability (depending on the sparseness of the bit vector) that the element $x_k$ corresponds to a previous input value $x_j$ for which the hash algorithms were applied and corresponding bits were set.

Figure 7c shows an outcome of a miss for input $x_3$. In this case, one or more bit positions in the bit vector corresponding to the hash algorithm results are not set. Figures 7b and 7c illustrate a couple of features that are inherent to Bloom filters. First, Bloom filters may produce false positives. This is because the bit vector that is formed by evaluating the hash algorithms against a number of inputs x is a union of the individual results for each input x. Accordingly, there may be a combination of set bit positions that produce a hit result for a test input $x_i$ as applied against the Bloom filter's bit vector, while the input $x_i$ was not used to generate the bit vector. This is known as a false positive. Another inherent feature of Bloom filters is they do not produce false negatives. If evaluation of an input $x_i$ as applied to a Bloom filter's bit vector results in a miss, it is known with certainty that $x_i$ is not a member of the set of previous Bloom filter inputs.

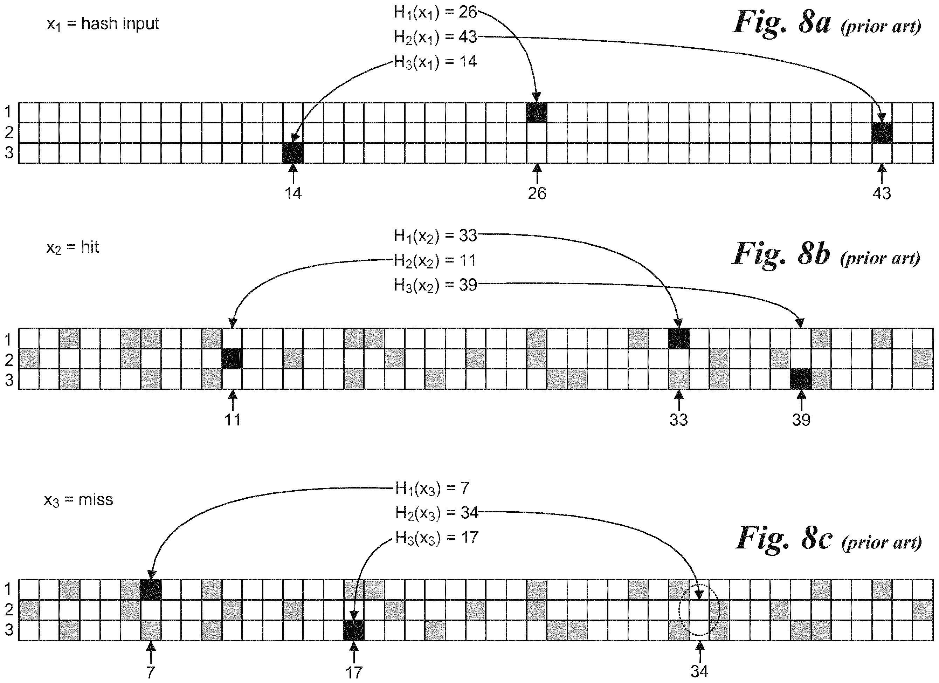

Figures 8a-8c illustrate an example of a Bloom filter that maintains a separate table row (and one-dimensional bit vector) for each Bloom filter hash algorithm. Although each row is depicted as having the same length, it is possible that the different hash algorithms will produce bit vectors of different lengths. As hash algorithms are evaluated against input x values (*e.g.*, against $x_1$ in Figure 8a), a corresponding bit is set at the bit position for the table row corresponding to the hash algorithm result. As before, input $x_2$ results in a hit (whether a true hit or a false positive), while input $x_3$ results in a miss.

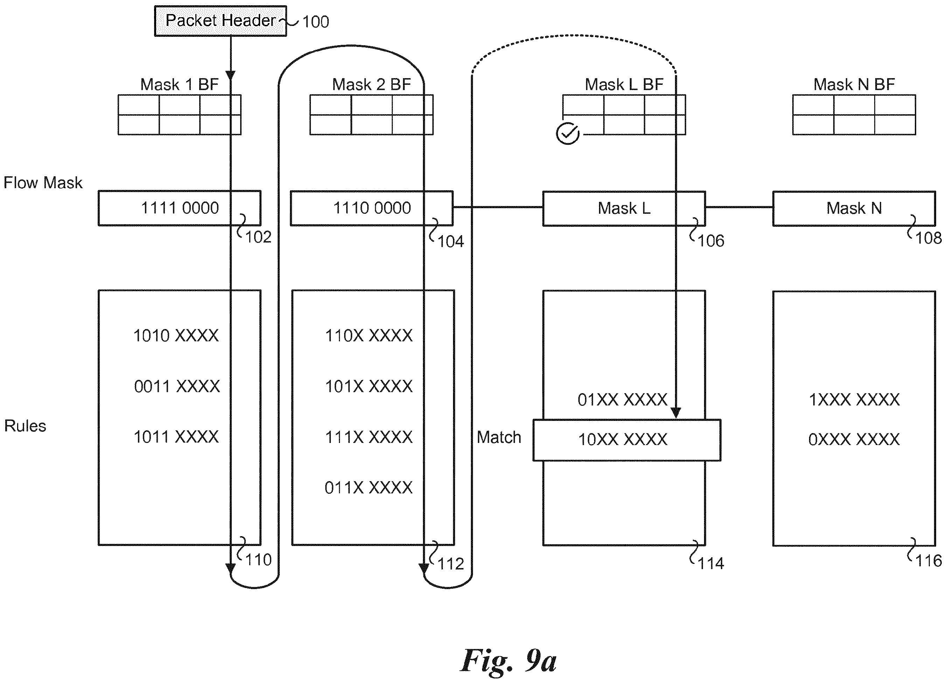

Under one embodiment, a filter is used for each unique wild card mask. When the flow is inserted, it is inserted in the sub-table and the corresponding Bloom filter is marked. This is illustrated in Figure 9a. As above, the processing of packet header 100 proceeds in a similar manner to that shown in Figure 1. First, flow mask 102 and rules 110 are checked for a match, resulting in a miss. Next, flow mask 104 and rules 112 are checked for a match, also resulting in a miss. Next mask 106 and rules are check for a match, resulting in a match for 10XX XXXX As a result, a corresponding bit for the Mask L Bloom filter is set.

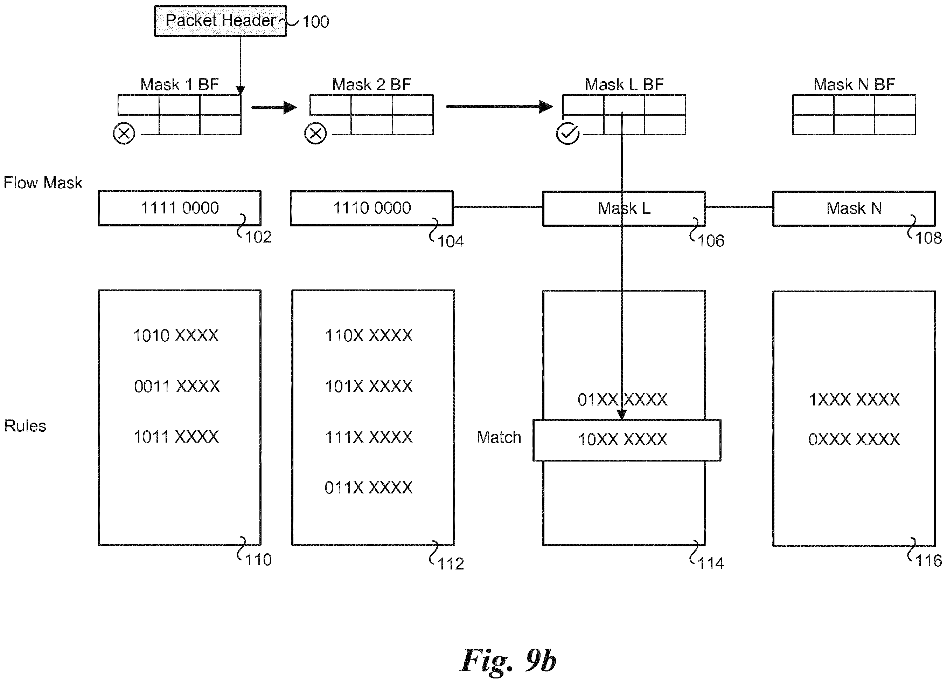

On lookups, the tuple match is against bits in one or more Bloom filter bitmaps, as opposed to matching entries in the sub-tables. As shown in Figure 9b, on lookups the series of Bloom filters are looked up first and one or more (ideally one) Bloom filter will indicate that this flow key (AND operation of wild card mask and flow header fields) has been inserted in the corresponding sub-table. If no Bloom filter returned that flow key is present, then with 100% probability it can be verified that the key has not been inserted.

Pre-processing with a Vector of Bloom Filters

The foregoing scheme can be extended to a Vector of Bloom Filters (VBF). VBF optimizes the first level of indirection, using a series of Bloom filters corresponding to the number of sub-tables. As before, the insert operation marks only the Bloom filter corresponding to the correct sub-table, while the lookup operation sequentially goes through all of the filters and finds the ones that indicate a positive membership.

VBF, however differs in how the flow key is constructed. In a regular Bloom filter, the flow key is a "masked" key, where it is formed using an AND operation for the incoming packet fields with the unique wild card mask of each sub-table. This operation is a costly operation since it requires scatter and gather of different fields of the packet header (involving multiple memory accesses), and moreover, this is repeated for every sub-table, since each has its own mask.

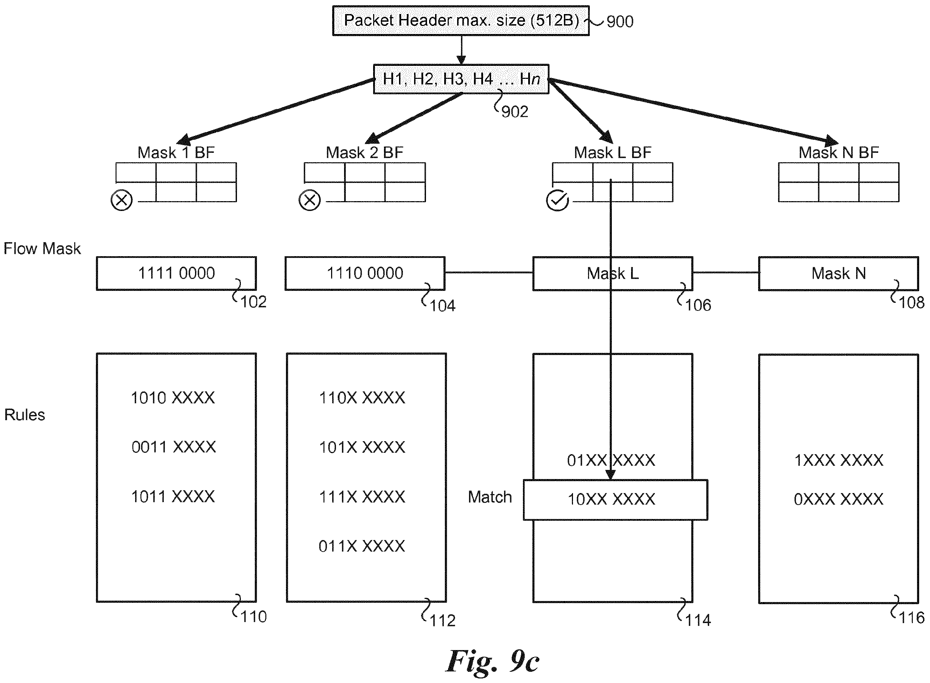

As shown in Figure 9c, the idea of VBF is to use unmasked full key (all fields of the packet header irrespective of the wild card masks, e.g., 512B for OvS), as depicted by a packet header 900 and header fields 902. When inserting a new flow, the full unmasked key is hashed, and only the corresponding filter (corresponding to the mask specified in the insert command) is marked. During lookup, the full unmasked key is hashed and each filter is searched (i.e., using a regular lookup operation). VBF uses longer keys, but saves the memory accesses associated with forming the flow key itself. Testing has indicated that VBF significantly improves the lookup throughput (2X-3X) when compared with the sequential search of sub-tables or using the conventional Bloom filter scheme as the first level of indirection.

Cuckoo Distributor Pre-filter

As discussed above, flow tables employ the use of hashing schemes to store and retrieve hashed-based key-value pairs. Conventional hash-based lookup tables, however, are typically memory-inefficient, which becomes important when attempting to achieve large scale or fit lookup tables into fast, expensive SRAM. For example, extra space is required to avoid collisions in hash tables, which results when two different keys produce the same hash result. In addition, to avoid locking overhead while allowing multiple threads to be read from the forwarding table, pointer-swapping approaches such as Read-Copy Update are used to update the table, which requires storing two full copies of the table instead of one.

One approach to address this problem is to use a hash table scheme known as Cuckoo hashing. Under Cuckoo hashing, a key is hashed with a first hash function, which identifies a first candidate row (bucket) in which the key can be stored, along with an associated value. Each bucket has a number of entries it can hold. As long as there are available entries for a given bucket, a new key will be added to that bucket. However, if the bucket resulting from hashing the key with the first hash function is full, a second hash function is used, and the key-value pair is stored at the row corresponding to the result of the second hash function. Under some conditions, both buckets will be full, in which case one of the existing entries is evicted and relocated by rehashing the key to identify the bucket it will be relocated to. If necessary, this key relocation process may be cascaded multiple times.

Read access of a Cuckoo hash table proceeds as follows (without considering concurrent access, for the time being). The first hash will be applied to the key, identifying a first candidate bucket in which the key is stored. The entries in the bucket will be searched to locate the correct entry via matching keys. If no match is found, the second hash function is applied to identify a second candidate bucket, with a guarantee that the key will be stored in an entry in one of the first and second candidate buckets.

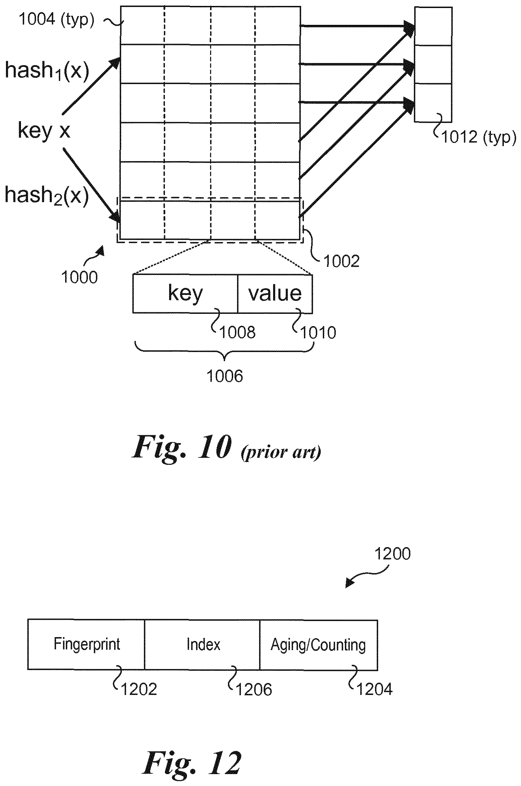

Figure 10 shows an exemplary Cuckoo hash table 1000 embodied as a two-way (hash) function, four-way association lookup table under which each row or bucket 1002 includes four entries 1004 for storing key/value pairs 1006, wherein each entry includes a key 1008 and its associated value 1010. Optionally, the value may be a pointer to another table or data structure via which an applicable value is stored. In addition, each bucket 1002 is mapped to a corresponding version counter 1012. To reduce the number of version counters, each version counter is mapped to multiple buckets via striping. (While two is shown in this example, more generally, a given version counter may be mapped to 1-$n$ buckets.) Additionally, while a four-way set-associative hash table is shown in the illustrative embodiment, it should be appreciated that an alternative set-associative hash table may be used.

As mentioned above, the inefficiency of tuple space search comes from the sequential search of multiple tables and having to form a lookup key for each table based on its unique mask. Ideally, it is desirable to figure out which sub-table to look into with the original flow key. In one embodiment, this is achieved by using a Cuckoo Distributor (CD) as the first level lookup mechanism.

At a high level, the Cuckoo Distributor employs a similar, but simpler data structure than a Cuckoo hashing table. When a flow is received, a quick hash lookup in the Cuckoo Distributor is performed using the unmasked key (saving the cost of forming a masked key) to retrieve an index pointing to the sub-table this flow belongs to, saving the overhead of searching through multiple sub-tables.

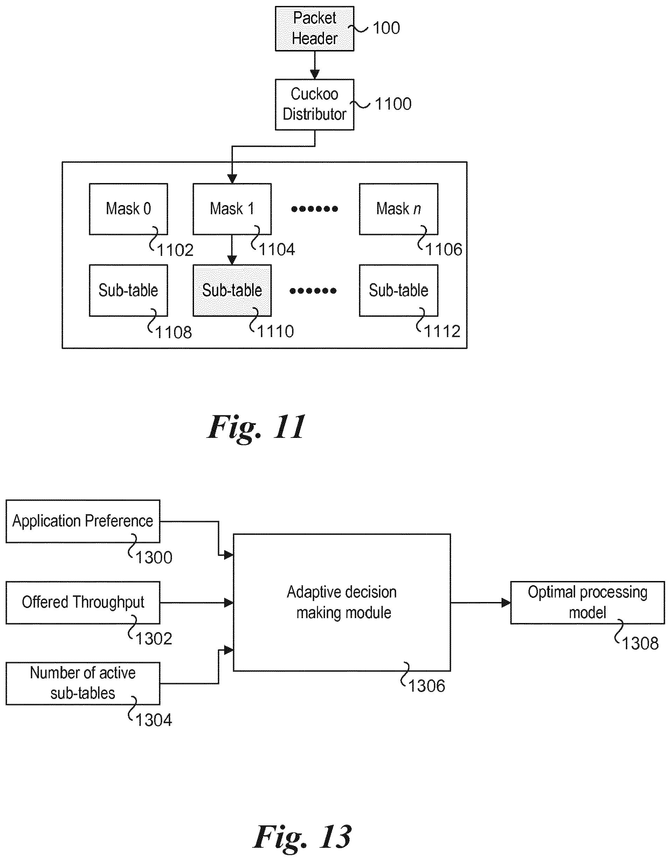

Figure 11 illustrates use of a Cuckoo Distributor scheme as a first level lookup in accordance with some embodiments. The illustrated components including a Cuckoo Distributor 1100, $n$ masks, depicted as masks 1102, 1104, and 1106, and a respective sub-table for each of the $n$ mask, depicted as sub-tables 1108, 1110, and 1112. A packet (having packet header 100) is received and forwarded to a Cuckoo Distributor 1100. A quick hash lookup in is performed using an unmasked full key to retrieve a value pointing to the sub-table (e.g., sub-table 1110 in this example) that includes a rule for processing the corresponding flow. In some embodiments, the unmasked full key will include the original flow key. In some embodiments, the output value of Cuckoo Distributor 1100 will be masked by one of masks 1102, 1104, 1106 before search in one of sub-tables 1108, 1110, or 1112.

Figure 12 illustrates an entry format of a Cuckoo Distributor in accordance with some embodiments. Each entry 1200 of the Cuckoo Distributor can include a small fingerprint 1202 (e.g., less than the size of a full packet header 100). For example, when a packet is received, processing circuitry (e.g., in the GPU or a CPU core) can compare a signature of the packet to fingerprint 1202 to determine the correct Cuckoo Distributor entry to which the packet belongs. Each entry 1200 can further include an aging field 1204 to facilitate the eviction of inactive (e.g., "stale") flows, as well as an index 1206. The index 1206 can include an indicator to identify the sub-table (e.g., sub-table 1108, 1110, 1112, etc.) in which rules for a corresponding packet will be found. In some embodiments, each entry consists of four bytes, with two bytes for fingerprint 1202, and one byte each for the aging field 1204 and the index 1206. However, embodiments are not limited to any particular size of entries 1200 or to any particular number or identity of fields included in the entries 1200. In at least these embodiments, one cache line can include 16 entries as one bucket. Advanced vector extension (AVX) comparing instructions can be used to compare the 16 entries in parallel.

Adapting to Application Preference and Runtime Environment

As mentioned above, each of the foregoing architectures has its advantages and disadvantages. For the packet-level parallelism with GPU-side table sorting, it achieves optimal performance when the number of sub-tables are small, or the traffic are heavily skewed, hence the number of table needs to be searched is small. In this case, this architecture suffers minimum overhead since it does not require work-item level synchronization or communication. However, when the number of tables need to be searched increases, the latency for each packet could increase, since the sub-tables for each packet are sequentially searched.

For the second (two-level parallelism) architecture, since sub-tables for the same packet can be processed and searched in parallel, the latency can be reduced compared to the packet-level parallelism with GPU-side table sorting; however, this method requires work-group level synchronization, and when the number of sub-tables is small to begin with, the overhead of synchronization might outweigh the benefit of sub-table level parallelism. This architecture also requires the most EUs due to the two-levels of parallelism.

The third (dynamic two-level parallel processing with pre-screening schemes and device-side enqueue) architecture requires the least computing resources, since it employs pre-screening to eliminate unnecessary sub-tables already; only kernel for searching the targeted sub-table(s) are launched by the device-side enqueue process. However, when the number of sub-tables is small, the GPU computing resources are abundant and latency requirement is tight, this may not be the most optimal solution.

Based on these observations, an adaptive decision making mechanism to switch between the three architectures is provided to satisfy user preference and achieve optimal performance. An example of the adaptive decision making mechanism is shown in Figure 13. As illustrated, three inputs, including an application preference(s) 1300, an offered throughput 1302, and a number of active sub-tables 1304, are received as inputs to an adaptive decision making module 1306 that outputs an optimal processing model 1308.

There are several aspects regarding application preferences. For example, if the application prefers to use minimum GPU resources, then architecture 3 should be the choices, since it dynamically performs device-side enqueuing to just utilize a necessary amount of EUs and lookup of a minimum number of tables. If the user prefers to optimize for minimum latency, in general architecture 2 is preferred, thanks to its high level of parallelism. However, when the number of active tables is very small, architecture 2, due to its work-group level synchronization overhead, is not the optimal choice. The threshold is a system parameter. On the other hand, if the maximum throughput is the ultimate metric, architecture 1 or architecture 3 would be the optimal choices depends on the number of active tables.

Offered Throughput: The incoming throughput can have an impact on the architecture. If the incoming throughput is low, it makes sense to use a scheme as architecture 2 to process packets fast and go to idle mode.

Number of active sub-tables. Active tables refers to those tables where a matching frequency is statistically significant - otherwise, the table is a stale table, and will be ranked accordingly by the GPU-side sorting scheme). If number of active sub-stable is small (such as < 2, for example), architecture 1 outperforms all other options, since sequential search is computationally inexpensive in this case.

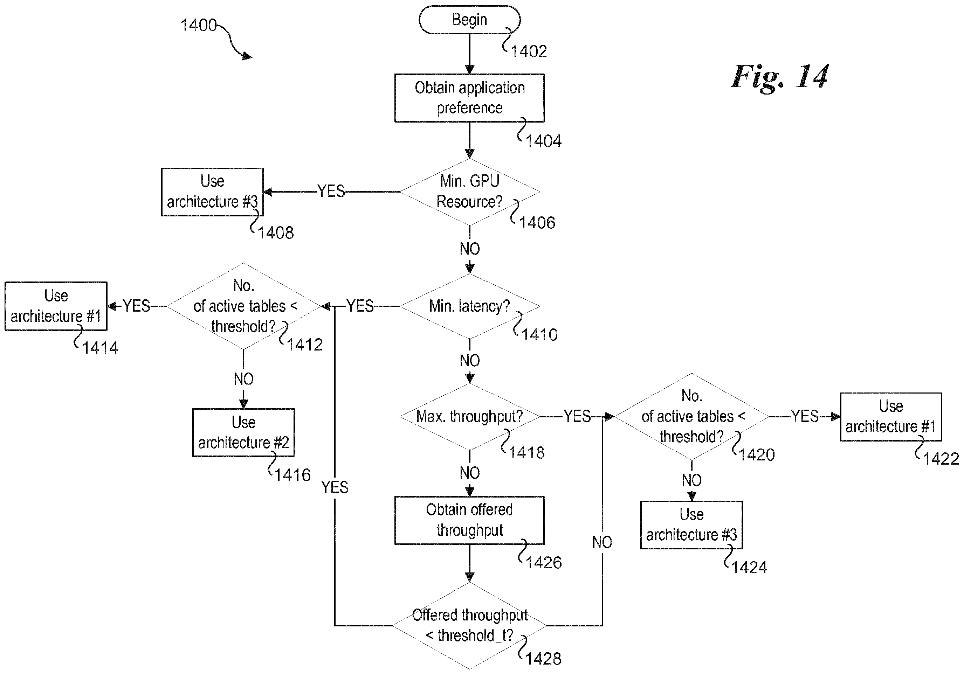

Figure 14 shows a flowchart 1400 illustrating operations and logic corresponding to an embodiment of an exemplary adaptive selection algorithm in the adaptive decision making module based on the foregoing selection criteria. The process begins in a start block 1402, with the application preference obtained in a block 1404. In a decision block 1406 a determination is made to whether the application preference is to use a minimum level of GPU resource(s). If the decision is YES, the logic proceeds to a block 1408 in which architecture #3 is selected to be used.

If the answer to decision block 1406 is NO, the logic proceeds to a decision block 1410 in which a determination is made to whether the application preferences include processing packets with minimum latency. If the answer is YES, the logic proceeds to a decision block 1412 in which a determination is made to whether the number of active tables is less than a threshold. If it is (answer is YES), then architecture #1 is selected, as depicted by a block 1414. If the answer to decision block 1412 is NO, then architecture #2 is selected to be used, as shown in a block 1416.

Returning to decision block 1410, if the answer in NO the logic proceeds to a decision block 1418 in which a determination is made to whether the application preferences include a criteria for maximum throughput. If the answer is YES, the logic proceeds to a decision block 1420 in which a determination is made to whether the number of active tables is less than a threshold. If the answer is YES, architecture #1 is selected, as depicted in a block 1422. If the answer to decision block 1420 is NO, architecture #3 is selected, a shown in a block 1424.

If the answer to decision block 1418 is NO, the logic proceeds to a block 1426 in which the offered throughput is obtained. As shown in a decision block 1428, if the offered throughput is less than some threshold, the logic proceeds to decision block 1412. Otherwise, if the offered throughput is greater or equal to the threshold, the logic proceeds to decision block 1420.

OCL API for OvS integration

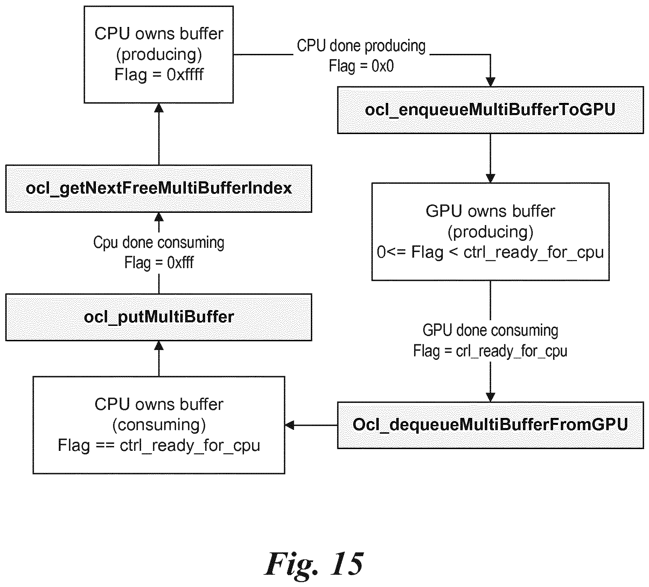

In accordance with further aspects of some embodiments, a set of Application Program Interfaces (APIs) has been developed that tightly integrates the packet framework of Figure 2 into the OvS datapath to inline accelerator lookup. Figure 15 shows a subset of the APIs that support an active packet workflow. APIs like *ocl_terminateKernelThread, ocl_createControlBuffer,* and *ocl_queryPersistentThreadCapacity* are created to support framework setup and cleanup. In addition, a new attribute for GPU-kernel side *_attribute (continuous_thread)* is provided to indicate the GPU-kernel type being Continuous Threads. A set of utility APIs such as *get_continuous_thread_id, commit_multibuffer, workgroup_commit_multibuffer*, and *terminate_thread* are also provide to make the packet processing framework transparent to application developers.

To synchronize buffers between CPU and GPU, a flag-polling method is used, which means every single thread is polling a communication flag even if it belongs to the same batch with others. For example, if there are 120 multi-buffers, there will be 3840 (32 packets per batch times 120) Continuous Threads in flight polling on the 120 flags. To effectively reduce the number of redundant cache line accesses, we optimized the mechanism via applying single-work-item poll, which means, for any given batch, only the first work-item/thread needs to poll on the communication flag to determine the batch readiness.

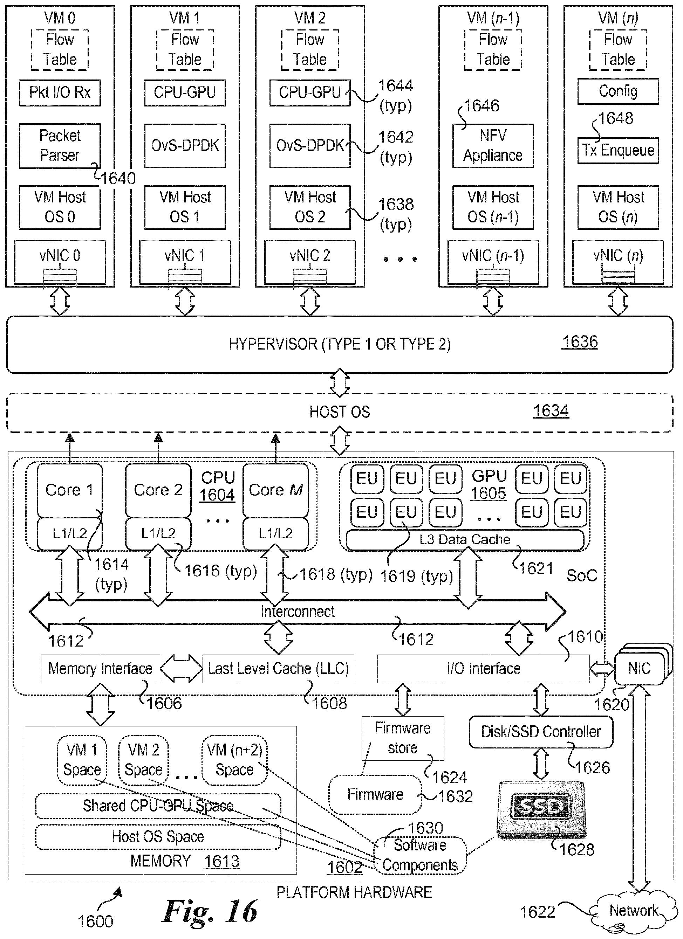

Figure 16 shows an exemplary host platform configuration 1600 including platform hardware 1602 and various software-based components configured to implement aspects of the embodiments described herein. Platform hardware 1602 includes a CPU 1604 and GPU 1605 coupled to a memory interface 1606, a last level cache (LLC) 1608 and I/O interface 1610 via an interconnect 1612. In some embodiments, all or a portion of the foregoing components may be integrated on a System on a Chip (SoC). Memory interface 1606 is configured to facilitate access to system memory 1613, which will usually be separate from the SoC.

CPU 1604 includes a core portion including *M* processor cores 1614, each including a local level 1 (LI) and level 2 (L2) cache 1616. Optionally, the L2 cache may be referred to as a "middle-level cache" (MLC). As illustrated, each processor core 1616 has a respective connection 1618 to interconnect 1612 and operates independently from the other processor cores.

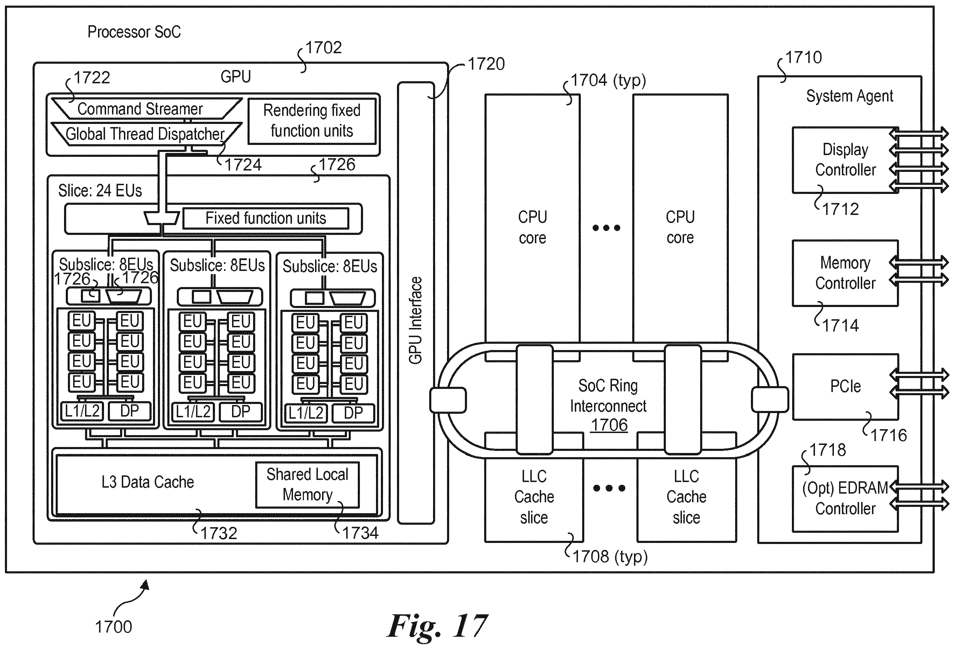

GPU 1605 includes a plurality of execution units (EU) 1619 and an L3 data cache 1621. Further details of one embodiment of a processor SoC with integrated GPU are shown in Figure 17.

For simplicity, interconnect 1612 is shown as a single double-ended arrow representing a single interconnect structure; however, in practice, interconnect 1612 is illustrative of one or more interconnect structures within a processor or SoC, and may comprise a hierarchy of interconnect segments or domains employing separate protocols and including applicable bridges for interfacing between the interconnect segments/domains. For example, the portion of an interconnect hierarchy to which memory and processor cores are connected may comprise a coherent memory domain employing a first protocol, while interconnects at a lower level in the hierarchy will generally be used for I/O access and employ non-coherent domains. The interconnect structure on the processor or SoC may include any existing interconnect structure, such as buses and single or multi-lane serial point-to-point, ring, or mesh interconnect structures.

I/O interface 1610 is illustrative of various I/O interfaces provided by platform hardware 1602. Generally, I/O interface 1610 may be implemented as a discrete component (such as an ICH (I/O controller hub) or the like), or it may be implemented on an SoC. Moreover, I/O interface 1610 may also be implemented as an I/O hierarchy, such as a PCIe™ I/O hierarchy. I/O interface 1610 further facilitates communication between various I/O resources and devices and other platform components. These include one or more NICs 1620 that is configured to facilitate access to a network 1622, and various other I/O devices, which include a firmware store 1624, a disk/SSD (solid-state disk) controller 1626, and an disk drive 1628. More generally, disk drive 1628 is representative of various types of non-volatile storage devices, including both magnetic- and optical-based storage devices, as well as solid-state storage devices, such as SSDs or Flash memory.

The multiple cores 1614 of CPU 1604 are employed to execute various software components 1630, such as library components, modules and applications, which are stored in one or more non-volatile storage devices, such as depicted by disk drive 1628. Optionally, all or a portion of software components 1630 may be stored on one or more storage devices (not shown) that are accessed via a network 1622

During boot up or run-time operations, various software components 1630 and firmware 1632 are loaded into system memory 1613 and executed on cores 1614 as processes comprising execution threads or the like. Depending on the particular processor or SoC architecture, a given "physical" core may be implemented as one or more logical cores, with processes being allocated to the various logical cores. For example, under the INTEL® Hyperthreading™ architecture, each physical core is implemented as two logical cores.

Additional software components are executed by various EUs 1619 one GPU 1605 to support various GPU operations and functions described herein. The CPU and GPU also share a portion of system memory 1613 labeled as Shared CPU-GPU Space. This shared memory space is similar to shared memory 204 in Figure 2.

Under a typical system boot for platform hardware 1602, firmware 1632 will be loaded and configured in system memory 1613, followed by booting a host operating system (OS) 1634. Subsequently, a (Type-2) hypervisor 1636 (also referred to a Virtual Machine Manager or VMM), which may generally comprise an application running on host OS 1634, will be launched. Hypervisor 1636 may then be employed to launch various virtual machines, $VM_{0-n}$, each of which will be configured to use various portions (*i.e.*, address spaces) of system memory 1613. In turn, each virtual machine $VM_{0-n}$ may be employed to host a respective operating system 1638.

During run-time operations, hypervisor 1636 enables reconfiguration of various system resources, such as system memory 1613, cores 1614, and disk drive(s) 1628. Generally, the virtual machines provide abstractions (in combination with hypervisor 1636) between their hosted operating system and the underlying platform hardware 1602, enabling the hardware resources to be shared among $VM_{0-n}$. From the viewpoint of each hosted operating system, that operating system "owns" the entire platform, and is unaware of the existence of other operating systems running on virtual machines. In reality, each operating system merely has access to only the resources and/or resource portions allocated to it by hypervisor 1636.

In addition to a Type-2 hypervisor, hypervisor 1636 may be implemented as a Type-1 or "bare-metal" hypervisor. Under this approach, the hypervisor runs directly on the platform hardware without an intervening OS layer.

Each of $VM_{0-n}$ includes a virtual network interface controller (vNIC), and runs one or more applications on its host OS. The vNICs are connected to a virtual switch (not shown), such as implemented via a hypervisor or other software entity. In one embodiment, OvS software components are used to facilitate vNIC and other virtual networking functionality.

In the illustrated embodiment of Figure 16, the VMs are configured to implement an SDN service chain using multiple NFV appliances and/or NFV-type functions. As discussed above, this may include operations such as packet forwarding, Secure Sockets Layer (SSL) encryption/decryption, and regular expression matching in intrusion detection systems (e.g., firewall), as well as other functions.

Generally the software components for implementing the SDN service chain functions will be executed on the CPU cores. However, as discussed above, some of the operations, such as those facilitating flow classification, may be implemented via software executing on GPU EUs. Under the embodiment of Figure 16, software components, implemented as software instructions configured to run on CPU cores and GPU EUs, are used to implement the SDN service chain.

Under a common approach, when packets are received at a NIC port, they are copied from buffers in the NIC (not shown) to memory using direct memory access (DMA) facilities provided by the platform. Once the packets have been DMA'ed into buffers in system memory, they are parsed to extract the packet headers, as depicted by a packet parser 1640.

Once the packets have been passed, they are forwarded for flow classification, with the CPU-side of the operations performed using OvS-DPDK components 1642 and software running on the CPU cores to buffer packets and facilitate GPU control and communication operations, as depicted by CPU-GPU blocks 1644. After the packets have been classified to flows, additional processing operations may be performed, as depicted by an NFV appliance 1646. It will be recognized that a single VM may implement one or more NFV appliances or otherwise implement NFV functions, and that VMs in addition to those shown may be used to host other NFV appliances and functions (not shown). One processing of a packet is completed, and the packets final destination is not the host system or any of the VMs hosted by platform hardware 1602, the packet will be forwarded back onto the network. This includes being enqueued in a transmit (Tx) queue on one of NICs 1620, as depicted by a Tx enqueue block 1648. As with receiving packets, packets are copied from buffers in system memory 1613 to Tx buffers on a NIC using a DMA operation.

Figure 17 shows one embodiment of a processor SoC 1700 with an integrated GPU 1702. Processor SoC 1700 includes a CPU with a plurality of CPU cores 1704, each including L1 and L2 caches (not shown) and coupled to an SoC ring interconnect 1706. The processor also includes an LLC cache that is logically partitioned into multiple LLC cache slices 1708, each with its own agent (not shown) that are also coupled to SoC ring interconnect 1706. The LLC cache slices work together as a single cache that is operated as a shared, distributed cache. In addition to use by CPU cores 1704, the distributed cache is shared with GPU 1702.

Processor SoC 1700 further employs a system agent 1710 coupled to SoC ring interconnect 1706 that includes a display controller 1712, a memory controller 1714, a PCIe block 1716, and an optional embedded dynamic random access memory (EDRAM) controller 1718. The EDRAM controller, when included, provides access to EDRAM (not shown) that is embedded on processor SoC 1700.

GPU 1702 includes a GPU interface 1720 coupled to SoC ring interconnect 1706, a command streamer 1722, a global thread dispatcher 1724, and multiple slices 1726 (one of which is shown). In the illustrated embodiment, each slice 1726 includes three subslices, each with eight EUs. Other configurations may also be implemented. Each subslice

**EP 3 493 052 A1**

further includes an instruction cache 1728, a local thread dispatcher 1370, an L1 and L2 cache, and a data port (DP), and is coupled to a L3 data cache 1732 including shared local memory 1734.

In one embodiment, SoC ring interconnect 1706 is a bi-directional is a bi-directional ring that has a 32-byte wide data bus, with separate lines for request, snoop, and acknowledge. Each CPU core 1704 is regarded as a unique agent. Similarly, GPU 1702 is treated as a unique agent on the interconnect ring. All off-chip system memory transactions to/from CPU cores 1704 and to/from GPU 1702 are facilitated by this interconnect, through system agent 1710, and memory controller 1714 (which would be connected to system memory (not shown) via one or more memory channels.

The foundational building block of the GPU compute architecture is the EU. In one embodiment, the architecture of an EU is a combination of simultaneous multi-threading (SMT) and fine-grained interleaved multi-threading (IMT). These are compute processors that drive multiple issue, single instruction, multiple data arithmetic logic units (SIMD ALUs) pipelined across multiple threads, for high-throughput floating-point and integer compute. The fine-grain threaded nature of the EUs ensures continuous streams of ready to execute instructions, while also enabling latency hiding of longer operations such as memory scatter/gather, sampler requests, or other system communication.

Performance results

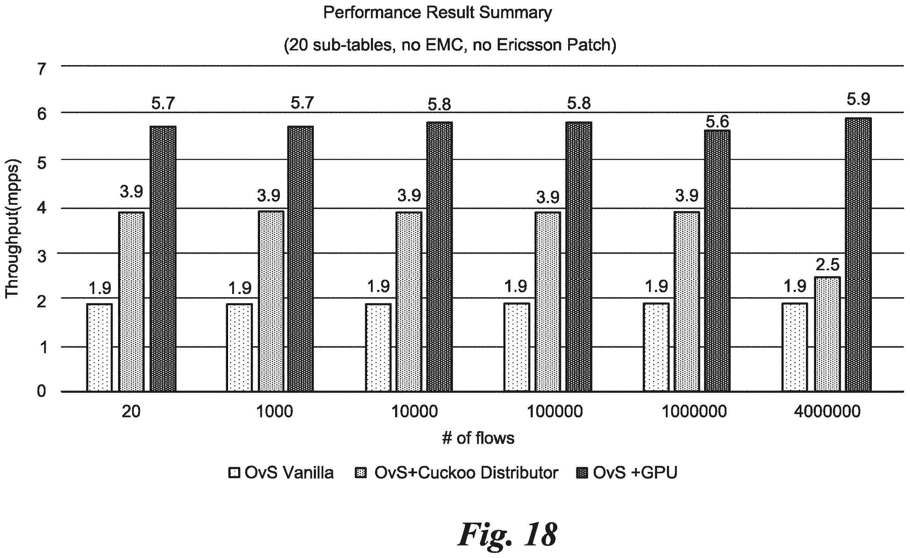

A bar graph illustrating some preliminary performance results are shown in Figure 18. As shown, the performance of a general OvS implementation (OvS Vanilla), OvS combined with Cuckoo Distributor, and OvS combined with integrated GPU were measured. Each approach demonstrated a consistent level of throughput (in millions of packets per second) across a number of flows ranging from 20 to 400,000. Also, OvS combined with the integrated GPU approach had significantly higher performance than to other two schemes.

The hardware used for one set of performance test is show in TABLE 1 below.

TABLE 1

|  | CPU+GPU | CPU Only |
|---|---|---|
| CPU | Intel Xeon® CPU E3-1585L v5 @ 3.0 Ghz | Intel(R) Xeon(R) CPU E5-2699 v4 @ 2.20GHz |
| GPU | Intel(R) Iris(TM) Pro Graphics P580 (GT4e) | N/A |
| GPU L3 Cache | 2MB | N/A |
| LLC Cache | 8MB | 55MB |
| DRAM | 16G DDR4 @ 2.1 MHz | 16G DDR4 @2.1 MHz |
| Subslice count | 9 | N/A |
| EU/subslice | 8 | N/A |
| Total EU count | 72 | N/A |
| Thread Count | 7 | N/A |
| SLM Size | 576 K | N/A |

Further aspects of the subject matter described herein are set out in the following numbered clauses:

1. A method for performing flow classification, comprising:

buffering a plurality of packets in a plurality of buffers in memory accessible to each of a central processing unit (CPU) and a graphic processing unit (GPU);
performing, using the GPU, parallel flow classification of the plurality of packets using a plurality of work groups, each work group associated with a respective set of work items and being used to process a respective batch of packets using a batch process;
for each packet processed by a batch process,
performing flow classification of the packet using a work item by matching a tuple defined by fields in a header for the packet with rules in one of a plurality of sub-tables for the work item, wherein the plurality of sub-tables are sequentially searched in a search order;
maintaining one or more hit count histograms, wherein each time a tuple match of a rule in a given sub-table is found, the hit count for that sub-table is incremented; and
using a hit count histogram to re-sort the search order of the sub-tables for one or more work items.

13

2. The method of claim 1, wherein the method is performed on a processor including a CPU and an integrated GPU.

3. The method of claim 1, further comprising:

maintaining a global hit count histogram, wherein the global hit count histogram stores an aggregation of hit counts for each sub-table across all of the work items and across all of the work groups.

4. The method of claim 3, further comprising:

storing a local histogram for each work group containing a hit count for each sub-table processed by work items for the work group for a given batch process;
in connection with completing a batch process,
updating the global hit count histogram with the local hit count histogram; and
re-setting the local hit count histogram.

5. The method of claim 4, further comprising:

periodically resorting the order of the sub-tables for one or more work items based on a current state of the global hit count histogram.

6. The method of claim 1, wherein, for a given batch process for a given work group, flow classification for at least a portion of packets in the batch is performed in parallel.

7. The method of claim 1, wherein, for a given batch process for a given work group, flow classification for all of the packets in the batch is performed in parallel.

8. The method of claim 1, wherein the method is implemented by executing a continuous GPU thread for each work group.

9. The method of claim 1, wherein the method is implemented using Open vSwitch software components executing on the CPU.

10. The method of claim 1, wherein the method is implemented using Data Plane Development Kit (DPDK) software components executing on the CPU.

11. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;
system memory, coupled to the memory controller;
one or more storage devices having instructions comprising software components stored therein configured to be executed on the processor cores and GPU processing elements, wherein, upon execution, the instructions enable the system to,
buffer a plurality of packets in a plurality of buffers in a shared portion of system memory accessible to each of the CPU and GPU;
perform, via execution of a portion of the instructions on the GPU processing elements, parallel flow classification of the plurality of packets using a plurality of work groups, each work group associated with a respective set of work items and being used to process a respective batch of packets using a batch process;
for each packet processed by a batch process,
perform flow classification of the packet using a work item by matching a tuple defined by fields in a header for the packet with rules in one of a plurality of sub-tables for the work item, wherein the plurality of sub-tables are sequentially searched in a search order;
maintain one or more hit count histograms, wherein each time a tuple match of a rule in a given sub-table is found, the hit count for that sub-table is incremented; and
employ a hit count histogram to re-sort the search order of the sub-tables for one or more work items.

12. The system of claim 11, wherein execution of the instructions further enables the system to:

maintain a global hit count histogram, wherein the global hit count histogram stores an aggregation of hit counts for each sub-table across all of the work items and across all of the work groups.

13. The system of claim 12, wherein execution of the instructions further enables the system to:

store a local histogram for each work group containing a hit count for each sub-table processed by work items for the work group for a given batch process;
in connection with completing a batch process,
update the global hit count histogram with the local hit count histogram; and
re-set the local hit count histogram.

14. The system of claim 13, wherein execution of the instructions further enables the system to:
periodically resort the order of the sub-tables for one or more work items based on a current state of the global hit count histogram.

15. The system of claim 11, wherein, for a given batch process for a given work group, flow classification for at least a portion of packets in the batch is performed in parallel using processing elements on the GPU.

16. The system of claim 11, wherein, for a given batch process for a given work group, flow classification for all of the packets in the batch is performed in parallel using processing elements on the GPU.

17. The system of claim 11, wherein flow classification operations are implemented by executing a continuous GPU thread for each work group.

18. The system of claim 11, wherein the software components include Open vSwitch software components configured to be executed on the processor cores.

19. The system of claim 11, wherein the software components include Data Plane Development Kit (DPDK) software components configured to be executed on the processor cores.

20. One or more non-transitory machine readable mediums, having instructions stored thereon comprising software components configured to be executed on a processor including a plurality of processor cores and having an integrated graphic processing unit (GPU) including a plurality of processing elements, the processor installed in a compute platform including system memory coupled to the processor, wherein, upon execution of the instructions on the processor, the compute platform is enabled to:

buffer a plurality of packets in a plurality of buffers in a shared portion of system memory accessible to each of the CPU and GPU;
perform, via execution of a portion of the instructions on the GPU processing elements, parallel flow classification of the plurality of packets using a plurality of work groups, each work group associated with a respective set of work items and being used to process a respective batch of packets using a batch process;
for each packet processed by a batch process,
perform flow classification of the packet using a work item by matching a tuple defined by fields in a header for the packet with rules in one of a plurality of sub-tables for the work item, wherein the plurality of sub-tables are sequentially searched in a search order;
maintain one or more hit count histograms, wherein each time a tuple match of a rule in a given sub-table is found, the hit count for that sub-table is incremented; and
employ a hit count histogram to re-sort the search order of the sub-tables for one or more work items.

21. The one or more non-transitory machine readable mediums of claim 20, wherein execution of the instructions further enables the compute platform to:
maintain a global hit count histogram, wherein the global hit count histogram stores an aggregation of hit counts for each sub-table across all of the work items and across all of the work groups.

22. The one or more non-transitory machine readable mediums of claim 21, wherein execution of the instructions further enables the compute platform to:

store a local histogram for each work group containing a hit count for each sub-table processed by work items for the work group for a given batch process;
in connection with completing a batch process,
update the global hit count histogram with the local hit count histogram; and
re-set the local hit count histogram.

23. The one or more non-transitory machine readable mediums of claim 22, wherein execution of the instructions further enables the compute platform to:
periodically resort the order of the sub-tables for one or more work items based on a current state of the global hit count histogram.

24. The one or more non-transitory machine readable mediums of claim 20, wherein, for a given batch process for a given work group, flow classification for all of the packets in the batch is performed in parallel using processing elements on the GPU.

25. The one or more non-transitory machine readable mediums of claim 20, wherein flow classification operations are implemented by executing a continuous GPU thread for each work group.

26. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;
system memory, coupled to the memory controller; and
means for,
buffering a plurality of packets in a plurality of buffers in a shared portion of system memory accessible to each of the CPU and GPU;
performing, via execution of a portion of the instructions on the GPU processing elements, parallel flow classification of the plurality of packets using a plurality of work groups, each work group associated with a respective set of work items and being used to process a respective batch of packets using a batch process;
for each packet processed by a batch process,
performing flow classification of the packet using a work item by matching a tuple defined by fields in a header for the packet with rules in one of a plurality of sub-tables for the work item, wherein the plurality of sub-tables are sequentially searched in a search order;
maintaining one or more hit count histograms, wherein each time a tuple match of a rule in a given sub-table is found, the hit count for that sub-table is incremented; and
employing a hit count histogram to re-sort the search order of the sub-tables for one or more work items.

27. The system of claim 26, further comprising means for maintaining a global hit count histogram, wherein the global hit count histogram stores an aggregation of hit counts for each sub-table across all of the work items and across all of the work groups.

28. The system of claim 27, further comprising means for:

storing a local histogram for each work group containing a hit count for each sub-table processed by work items for the work group for a given batch process;
in connection with completing a batch process,
updating the global hit count histogram with the local hit count histogram; and
re-setting the local hit count histogram.

29. The system of claim 28, further comprising means for periodically resorting the order of the sub-tables for one or more work items based on a current state of the global hit count histogram.

30. The system of claim 26, wherein, for a given batch process for a given work group, flow classification for at least a portion of packets in the batch is performed in parallel using processing elements on the GPU.

31. The system of claim 26, wherein, for a given batch process for a given work group, flow classification for all of the packets in the batch is performed in parallel using processing elements on the GPU.

32. The system of claim 26, wherein flow classification operations are implemented by executing a continuous GPU thread for each work group.

33. The system of claim 26, wherein the means for elements include Open vSwitch software components configured to be executed on the processor cores.

34. The system of claim 11, wherein the means for elements include Data Plane Development Kit (DPDK) software components configured to be executed on the processor cores.

35. A method for performing flow classification, comprising:

buffering a plurality of packets in a plurality of buffers in memory accessible to each of a central processing unit (CPU) and a graphic processing unit (GPU);
defining rules in each of a plurality of sub-tables in a set of sub-tables to be used for matching tuples defined by data contained in one or more header fields for the packets;
performing parallel flow classification of the plurality of packets using a plurality of work groups, each work group associated with a respective set of work items and being used to process a respective batch of packets using a batch process;
for each packet processed by a batch process,
performing, using the GPU, parallel flow classification of the packet using a plurality of work items, each work item implementing a search of a portion of the sub-tables in the set of sub-tables for a rule matching the tuple for the packet, wherein the work items associated with a work group are organized such that it is possible to search each of the plurality of sub-tables in the set of sub-tables for each packet; and
classifying the packet to a flow corresponding to the rule that matches the tuple for the packet.

36. The method of claim 35, wherein the method is performed on a processor including a CPU and an integrated GPU.

37. The method of claim 35 or 36, wherein there are $n$ sub-tables in the set of sub-tables and there are $m$ work items in a work group, and wherein the work items are organized such that each work item searches $n/m$ sub-tables.

38. The method of any of claims 35-37, wherein each work item associated with a work group performs a sub-table tuple search for a single packet per batch of packets processed by the work group.

39. The method of any of claims 35-38, wherein each work item associated with a work group performs a sub-table tuple search for two or more packets per batch of packets processed by the work group.

40. The method of any of claims 35-39, wherein, for a given batch process for a given work group, flow classification for at least a portion of packets in the batch is performed in parallel.

41. The method of any of claims 35-40, wherein, for a given batch process for a given work group, flow classification for all of the packets in the batch is performed in parallel.

42. The method of any of claims 35-41, wherein the method is implemented by executing a continuous GPU thread for each work group.

43. The method of any of claims 35-42, wherein the method is implemented using Open vSwitch software components executing on the CPU.

44. The method of any of claims 35-43, wherein the method is implemented using Data Plane Development Kit software components, executing on the CPU.

45. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;
system memory, coupled to the memory controller;
one or more storage devices having instructions comprising software components stored therein configured to be executed on the processor cores and GPU processing elements, wherein, upon execution, the instructions enable the system to,
buffer a plurality of packets in a plurality of buffers in a shared portion memory of the system accessible to each of a central processing unit (CPU) and a graphic processing unit (GPU);
store a plurality of sub-tables in the shared portion of system memory, each sub-table including a plurality of rules to be used for matching tuples defined by data contained in one or more header fields for the packets;
perform parallel flow classification of the plurality of packets using a plurality of work groups, each work group associated with a respective set of work items and being used to process a respective batch of packets using a batch process;
for each packet processed by a batch process,
perform, using the GPU, parallel flow classification of the packet using a plurality of work items, each work item implementing a search of a portion of the sub-tables in the set of sub-tables for a rule matching the tuple for the packet, wherein the work items associated with a work group are organized such that it is possible to search each of the plurality of sub-tables in the set of sub-tables for each packet; and
classify the packet to a flow corresponding to the rule that matches the tuple for the packet.

46. The system of claim 45, wherein there are $n$ sub-tables in the set of sub-tables and there are $m$ work items in a work group, and wherein the work items are organized such that each work item searches $n/m$ sub-tables.

47. The system of claim 45 or 46, wherein each work item associated with a work group performs a sub-table tuple search for a single packet per batch of packets processed by the work group.

48. The system of any of claims 45-47, wherein each work item associated with a work group performs a sub-table tuple search for two or more packets per batch of packets processed by the work group.

49. The system of any of claims 45-48, wherein, for a given batch process for a given work group, flow classification for at least a portion of packets in the batch is performed in parallel.

50. The system of any of claims 45-49, wherein, for a given batch process for a given work group, flow classification for all of the packets in the batch is performed in parallel.

51. The system of any of claims 45-50, wherein a continuous GPU thread of instructions is executed for each work group.

52. The system of any of claims 45-51, wherein the software components include Open vSwitch software components configured to be executed on the processor cores.

53. The system of any of claims 45-52, wherein the software components include Data Plane Development Kit (DPDK) software components configured to be executed on the processor cores.

54. One or more non-transitory machine readable mediums, having instructions stored thereon comprising software components configured to be executed on a processor including a plurality of processor cores and having an integrated graphic processing unit (GPU) including a plurality of processing elements, the processor installed in a compute platform including system memory coupled to the processor, wherein, upon execution of the instructions on the processor, the compute platform is enabled to:

buffer a plurality of packets in a plurality of buffers in a shared portion memory of the system accessible to each of a central processing unit (CPU) and a graphic processing unit (GPU);

store a plurality of sub-tables in the shared portion of system memory, each sub-table including a plurality of rules to be used for matching tuples defined by data contained in one or more header fields for the packets;

perform parallel flow classification of the plurality of packets using a plurality of work groups, each work group associated with a respective set of work items and being used to process a respective batch of packets using a batch process;

for each packet processed by a batch process,

perform, using the GPU, parallel flow classification of the packet using a plurality of work items, each work item implementing a search of a portion of the sub-tables in the set of sub-tables for a rule matching the tuple for the packet, wherein the work items associated with a work group are organized such that it is possible to search each of the plurality of sub-tables in the set of sub-tables for each packet; and

classify the packet to a flow corresponding to the rule that matches the tuple for the packet.

55. The one or more non-transitory machine readable mediums of claim 54, wherein there are $n$ sub-tables in the set of sub-tables and there are $m$ work items in a work group, and wherein the work items are organized such that each work item searches $n/m$ sub-tables.

56. The one or more non-transitory machine readable mediums of claim 54 or 55, wherein each work item associated with a work group performs a sub-table tuple search for a single packet per batch of packets processed by the work group.

57. The one or more non-transitory machine readable mediums of any of claims 54-56, wherein each work item associated with a work group performs a sub-table tuple search for two or more packets per batch of packets processed by the work group.

58. The one or more non-transitory machine readable mediums of any of claims 54-57, wherein, for a given batch process for a given work group, flow classification for at least a portion of packets in the batch is performed in parallel.

59. The one or more non-transitory machine readable mediums of any of claims 54-57, wherein, for a given batch process for a given work group, flow classification for all of the packets in the batch is performed in parallel.

60. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;

system memory, coupled to the memory controller; and

mean for,

buffering a plurality of packets in a plurality of buffers in a shared portion memory of the system accessible to each of a central processing unit (CPU) and a graphic processing unit (GPU);

storing a plurality of sub-tables in the shared portion of system memory, each sub-table including a plurality of rules to be used for matching tuples defined by data contained in one or more header fields for the packets;

performing parallel flow classification of the plurality of packets using a plurality of work groups, each work group associated with a respective set of work items and being used to process a respective batch of packets using a batch process;

for each packet processed by a batch process,

performing, using the GPU, parallel flow classification of the packet using a plurality of work items, each work item implementing a search of a portion of the sub-tables in the set of sub-tables for a rule matching the tuple for the packet, wherein the work items associated with a work group are organized such that it is possible to search each of the plurality of sub-tables in the set of sub-tables for each packet; and

classifying the packet to a flow corresponding to the rule that matches the tuple for the packet.

61. The system of claim 60, wherein there are $n$ sub-tables in the set of sub-tables and there are $m$ work items in a work group, and wherein the work items are organized such that each work item searches $n/m$ sub-tables.

62. The system of claim 60 or 61, wherein each work item associated with a work group performs a sub-table tuple search for a single packet per batch of packets processed by the work group.

63. The system of any of claims 60-62, wherein each work item associated with a work group performs a sub-table tuple search for two or more packets per batch of packets processed by the work group.

64. The system of any of claims 60-63, wherein, for a given batch process for a given work group, flow classification for at least a portion of packets in the batch is performed in parallel.

65. The system of any of claims 60-64, wherein, for a given batch process for a given work group, flow classification for all of the packets in the batch is performed in parallel.

66. The system of any of claims 60-66, wherein a continuous GPU thread of instructions is executed for each work group.

67. The system of any of claims 60-67, wherein the means for elements include Open vSwitch software components configured to be executed on the processor cores.

68. The system of any of claims 60-68, wherein the means for elements include Data Plane Development Kit (DPDK) software components configured to be executed on the processor cores.

69. A method for performing flow classification, comprising:

buffering a plurality of packets in a plurality of buffers in memory accessible to each of a central processing unit (CPU) and a graphic processing unit (GPU);

defining rules in each of a plurality of sub-tables to be used for matching tuples defined by data contained in one or more header fields for the packets;

for each of the plurality of packets,

employing a pre-filter to identify a set of sub-tables from among the plurality of sub-tables to be searched for a tuple match of a tuple for the packet;

performing, using the GPU, parallel flow classification of the packet using a plurality of work items, each work item implementing a search of one or more of the sub-tables in the set of sub-tables for a rule matching the tuple for the packet, the searches implemented by the plurality of work items being performed in parallel; and

classifying the packet to a flow corresponding to the rule that matches the tuple for the packet.

70. The method of claim 69, further comprising performing, using the GPU, flow classification of the packets using two levels of parallelism.

71. The method of claim 70, wherein flow classification of the packets using two levels of parallelism comprises:

processing the plurality of packets using batches of packets;

for a given batch of packets,

pre-filtering each packet in the batch of packets,

assigning a respective work group for processing the packet, the work group associated with the plurality of work items used to perform flow classification of the packet in parallel, the flow classification of the packet by the plurality of work items constituting a first level of parallelism,

wherein processing of the packets in the respective work groups is performed in parallel for the batch of packets, constituting a second level of parallelism.

72. The method of claim 71, further comprising:

launching a master thread for processing of a first batch of packets;

enqueuing, via the master thread, a respective kernel to be executed to implement a tuple search for each respective work group; and

having the master thread re-launch itself to perform processing of a next batch of packets

73. The method of claim 71, wherein each work item performs a sub-table tuple search of a single sub-table.

74. The method of any of claims 69-73, wherein the method is performed on a processor including a CPU and an integrated GPU.

75. The method of any of claims 69-74, wherein the pre-filter is implemented using one or more Bloom filters.

76. The method of any of claims 69-75, wherein the pre-filter is implemented using a vector of Bloom filters.

77. The method of any of claims 69-76, wherein the pre-filter is implemented using a mechanism employing Cuckoo hashing that identifies a sub-table to be searched for each packet.

78. The method of any of claims 69-77, wherein the method is implemented using Open vSwitch software components executing on the CPU.

79. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;

system memory, coupled to the memory controller;

one or more storage devices having instructions comprising software components stored therein configured to be executed on the processor cores and GPU processing elements, wherein, upon execution, the instructions enable the system to,

buffer a plurality of packets in a plurality of buffers in a shared portion of the system memory accessible to each of a central processing unit (CPU) and a graphic processing unit (GPU);

store a plurality of sub-tables in the shared portion of system memory, each sub-table including a plurality of rules to be used for matching tuples defined by data contained in one or more header fields for the packets;

for each of the plurality of packets,

employ a pre-filter to identify a set of sub-tables from among the plurality of sub-tables to be searched for a tuple match of a tuple for the packet;

perform, using the GPU, parallel flow classification of the packet using a plurality of work items, each work item implementing a search of one or more of the sub-tables in the set of sub-tables for a rule matching the tuple for the packet, the searches implemented by the plurality of work items being performed in parallel; and

classify the packet to a flow corresponding to the rule that matches the tuple for the packet.

80. The system of claim 11, wherein execution of a portion of the instructions on the GPU enables the system to perform flow classification of the plurality of packets using two levels of parallelism.

81. The system of claim 12, wherein flow classification of the plurality of packets using two levels of parallelism comprises:

processing the plurality of packets using batches of packets;

for a given batch of packets,

pre-filtering each packet in the batch of packets;

assigning a respective work group for processing the packet, the work group associated with the plurality of work items used to perform flow classification of the packet in parallel, the flow classification of the packet by the plurality of work items constituting a first level of parallelism,

wherein processing of the packets in the respective work groups is performed in parallel for the batch of packets, constituting a second level of parallelism.

82. The system of claim 13, wherein execution of the instructions further enables the system to:

launch a master thread for processing of a first batch of packets;

enqueue, via the master thread, a respective kernel to be executed to implement a tuple search for each respective work group; and

cause the master thread to re-launch itself to perform processing of a next batch of packets.

83. The system of claim 13, wherein each work item performs a sub-table tuple search of a single sub-table.

84. The system of claim 11, wherein the pre-filter is implemented using one or more Bloom filters.

85. The system of claim 11, wherein the pre-filter is implemented using a vector of Bloom filters.

86. The system of claim 11, wherein the pre-filter is implemented using a mechanism employing Cuckoo hashing that identifies a sub-table to be searched for each packet.

87. The system of claim 11, wherein operations are implemented using Open vSwitch software components executing on the CPU.

88. One or more non-transitory machine readable mediums, having instructions stored thereon comprising software components configured to be executed on a processor including a plurality of processor cores and having an integrated graphic processing unit (GPU) including a plurality of processing elements, the processor installed in a compute platform including system memory coupled to the processor, wherein, upon execution of the instructions on the processor, the compute platform is enabled to:

buffer a plurality of packets in a plurality of buffers in a shared portion of the system memory accessible to each of a central processing unit (CPU) and a graphic processing unit (GPU);

store a plurality of sub-tables in the shared portion of system memory, each sub-table including a plurality of rules to be used for matching tuples defined by data contained in one or more header fields for the packets;

for each of the plurality of packets,

employ a pre-filter to identify a set of sub-tables from among the plurality of sub-tables to be searched for a tuple match of a tuple for the packet;

perform, using the GPU, parallel flow classification of the packet using a plurality of work items, each work item implementing a search of one or more of the sub-tables in the set of sub-tables for a rule matching the tuple for the packet, the searches implemented by the plurality of work items being performed in parallel; and

classify the packet to a flow corresponding to the rule that matches the tuple for the packet.

89. The one or more non-transitory machine readable mediums of claim 88, wherein execution of a portion of the instructions on the GPU enables the system to perform flow classification of the plurality of packets using two levels of parallelism.

90. The one or more non-transitory machine readable mediums of claim 89, wherein flow classification of the plurality of packets using two levels of parallelism comprises:

processing the plurality of packets using batches of packets;
for a given batch of packets,
pre-filtering each packet in the batch of packets,
assigning a respective work group for processing the packet, the work group associated with the plurality of work items used to perform flow classification of the packet in parallel, the flow classification of the packet by the plurality of work items constituting a first level of parallelism,
wherein processing of the packets in the respective work groups is performed in parallel for the batch of packets, constituting a second level of parallelism.

91. The one or more non-transitory machine readable mediums of claim 90, wherein execution of the instructions further enables the compute platform to:

launch a master thread for processing of a first batch of packets;
enqueue, via the master thread, a respective kernel to be executed to implement a tuple search for each respective work group; and
cause the master thread to re-launch itself to perform processing of a next batch of packets.

92. The one or more non-transitory machine readable mediums of claim 90, wherein each work item performs a sub-table tuple search of a single sub-table.

93. The one or more non-transitory machine readable mediums of any of claims 88-92, wherein the pre-filter is implemented using one or more Bloom filters.

94. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;
system memory, coupled to the memory controller; and
means for,
buffering a plurality of packets in a plurality of buffers in a shared portion of the system memory accessible to each of a central processing unit (CPU) and a graphic processing unit (GPU);
storing a plurality of sub-tables in the shared portion of system memory, each sub-table including a plurality of rules to be used for matching tuples defined by data contained in one or more header fields for the packets;
for each of the plurality of packets,
employing a pre-filter to identify a set of sub-tables from among the plurality of sub-tables to be searched for a tuple match of a tuple for the packet;
performing, using the GPU, parallel flow classification of the packet using a plurality of work items, each work item implementing a search of one or more of the sub-tables in the set of sub-tables for a rule matching the tuple for the packet, the searches implemented by the plurality of work items being performed in parallel; and
classifying the packet to a flow corresponding to the rule that matches the tuple for the packet.

95. The system of claim 94, further comprising means for performing flow classification of the plurality of packets using two levels of parallelism.

96. The system of claim 95, further comprising means for:

processing the plurality of packets using batches of packets;
for a given batch of packets,
pre-filtering each packet in the batch of packets; and
assigning a respective work group for processing the packet, the work group associated with the plurality of work items used to perform flow classification of the packet in parallel, the flow classification of the packet by the plurality of work items constituting a first level of parallelism,
wherein processing of the packets in the respective work groups is performed in parallel for the batch of packets, constituting a second level of parallelism.

97. The system of claim 96, further comprising means for:

launching a master thread for processing of a first batch of packets;
enqueuing, via the master thread, a respective kernel to be executed to implement a tuple search for each respective work group; and
causing the master thread to re-launch itself to perform processing of a next batch of packets.

98. The system of claim 96, wherein each work item performs a sub-table tuple search of a single sub-table.

99. The system of claim 94, wherein the pre-filter is implemented using one or more Bloom filters.

100. The system of claim 94, wherein the pre-filter is implemented using a vector of Bloom filters.

101. The system of claim 94, wherein the pre-filter is implemented using a mechanism employing Cuckoo hashing that identifies a sub-table to be searched for each packet.

102. The system of any of claims 94-101, wherein the means for elements include Open vSwitch software components executing on the CPU.

103. A method for selecting a processing model to perform flow classification of a plurality of packets on a compute platform having a processor including a central processing unit (CPU) with plurality of processor cores and an integrated graphics processing unit (GPU) with GPU resources including a plurality of processing elements, the method comprising:

configuring the compute platform to implement a plurality of processing models, wherein each of the plurality of processing models employ processing resources on the GPU to perform flow classification of packets using a tuple space search, wherein the tuple space search includes searching a plurality of sub-tables for a rule with a tuple match of a tuple for each of the plurality of packets using at least one level of parallelism;
receiving inputs including application preferences;
determining currently available GPU resources; and
selecting a processing model based on the application preferences in view of the currently available GPU resources.

104. The method of claim 103, wherein the plurality of processing models includes a processing model implementing packet-level parallelism with GPU-side table sorting under which a search order of the plurality of sub-tables is periodically re-sorted based on a relative hit-rate of each of the multiple sub-tables.

105. The method of claim 104, wherein the packet-level parallelism with GPU-side table sorting processing model comprises:

buffering a plurality of packets in a plurality of buffers in memory accessible to each of a the CPU and GPU;
performing, using the GPU, parallel flow classification of the plurality of packets using a plurality of work groups, each work group associated with a respective set of work items and being used to process a respective batch of packets using a batch process;
for each packet processed by a batch process,
performing flow classification of the packet using a work item by matching a tuple defined by fields in a header for the packet with rules in one of a plurality of sub-tables for the work item, wherein the plurality of sub-tables are sequentially searched in a search order;
maintaining one or more hit count histograms, wherein each time a tuple match of a rule in a given sub-table is found, the hit count for that sub-table is incremented; and
using a hit count histogram to re-sort the search order of the sub-tables for one or more work items.

106. The method of claim 103, wherein the plurality of processing models includes a processing model implementing two levels of parallelism, including packet-level parallelism and sub-table level parallelism.

107. The method of claim 106, wherein the processing model implementing two levels of parallelism comprises:

buffering a plurality of packets in a plurality of buffers in memory accessible to each of a central processing unit (CPU) and a graphic processing unit (GPU);
defining rules in each of a plurality of sub-tables in a set of sub-tables to be used for matching tuples defined by data contained in one or more header fields for the packets;
performing parallel flow classification of the plurality of packets using a plurality of work groups, each work group associated with a respective set of work items and being used to process a respective batch of packets using a batch process;
for each packet processed by a batch process,

performing, using the GPU, parallel flow classification of the packet using a plurality of work items, each work item implementing a search of a portion of the sub-tables in the set of sub-tables for a rule matching the tuple for the packet, wherein the work items associated with a work group are organized such that it is possible to search each of the plurality of sub-tables in the set of sub-tables for each packet; and

classifying the packet to a flow corresponding to the rule that matches the tuple for the packet.

108. The method of claim 103, wherein the plurality of processing models includes a processing model implementing dynamic two-level parallel processing with pre-screening.

109. The method of claim 108, wherein the processing model implementing dynamic two-level parallel processing with pre-screening comprises:

buffering a plurality of packets in a plurality of buffers in memory accessible to each of the CPU and GPU; defining rules in each of a plurality of sub-tables to be used for matching tuples defined by data contained in one or more header fields for the packets;

for each of the plurality of packets,

employing a pre-filter to identify a set of sub-tables from among the plurality of sub-tables to be searched for a tuple match of a tuple for the packet;

performing, using the GPU, parallel flow classification of the packet using a plurality of work items, each work item implementing a search of one or more of the sub-tables in the set of sub-tables for a rule matching the tuple for the packet, the searches implemented by the plurality of work items being performed in parallel; and classifying the packet to a flow corresponding to the rule that matches the tuple for the packet.

110. The method of any of claims 103-109, wherein the inputs that are received include a number of active sub-tables.

111. The method of any of claims 103-110, wherein the application preferences includes a preference to optimize for minimum latency.

112. The method of any of claims 103-111, wherein the inputs that are received include an incoming throughput of packets.

113. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;

system memory, coupled to the memory controller;

one or more storage devices having instructions comprising software components stored therein configured to be executed on the processor cores and GPU processing elements, wherein, upon execution, the instructions enable the system to,

implement a plurality of processing models, wherein each of the plurality of processing models employ processing resources on the GPU to perform flow classification of packets using a tuple space search, wherein the tuple space search includes searching a plurality of sub-tables for a rule with a tuple match of a tuple for each of the plurality of packets using at least one level of parallelism;

receive inputs including application preferences;

determine currently available GPU resources; and

select a processing model based on the application preferences in view of the currently available GPU resources.

114. The system of claim 113, wherein the plurality of processing models includes a processing model implementing packet-level parallelism with GPU-side table sorting under which a search order of the plurality of sub-tables is periodically re-sorted based on a relative hit-rate of each of the multiple sub-tables.

115. The system of claim 114, wherein the instructions include software components for the processing model implementing the packet-level parallelism with GPU-side table sorting processing model, and wherein execution of the software components enable the system to:

buffer a plurality of packets in a plurality of buffers in memory accessible to each of a the CPU and GPU; perform, using the GPU, parallel flow classification of the plurality of packets using a plurality of work groups, each work group associated with a respective set of work items and being used to process a respective batch of packets using a batch process;

for each packet processed by a batch process,

perform flow classification of the packet using a work item by matching a tuple defined by fields in a header for the packet with rules in one of a plurality of sub-tables for the work item, wherein the plurality of sub-tables are sequentially searched in a search order;

maintain one or more hit count histograms, wherein each time a tuple match of a rule in a given sub-table is found, the hit count for that sub-table is incremented; and

employ a hit count histogram to re-sort the search order of the sub-tables for one or more work items.

116. The system of claim 113, wherein the plurality of processing models includes a processing model that performs flow classification of packets using two levels of parallelism, including packet-level parallelism and sub-table level parallelism.

117. The system of claim 116, wherein the instructions include software components for implementing the processing model that performs flow classification of packets using two levels of parallelism, and wherein execution of the software components enables the system to:

buffer a plurality of packets in a plurality of buffers in a shared portion memory of the system accessible to each of a central processing unit (CPU) and a graphic processing unit (GPU);

store a plurality of sub-tables in the shared portion of system memory, each sub-table including a plurality of rules to be used for matching tuples defined by data contained in one or more header fields for the packets;

perform parallel flow classification of the plurality of packets using a plurality of work groups, each work group associated with a respective set of work items and being used to process a respective batch of packets using a batch process;

for each packet processed by a batch process,

perform, using the GPU, parallel flow classification of the packet using a plurality of work items, each work item implementing a search of a portion of the sub-tables in the set of sub-tables for a rule matching the tuple for the packet, wherein the work items associated with a work group are organized such that it is possible to search each of the plurality of sub-tables in the set of sub-tables for each packet; and

classify the packet to a flow corresponding to the rule that matches the tuple for the packet.

118. The system of claim 113, wherein the plurality of processing models includes a processing model implementing dynamic two-level parallel processing with pre-screening.

119. The system of claim 118, wherein the instructions include software components for the processing model implementing dynamic two-level parallel processing with pre-screening, and wherein execution of the instructions enables the system to:

buffer a plurality of packets in a plurality of buffers in a shared portion of the system memory accessible to each of a central processing unit (CPU) and a graphic processing unit (GPU);

store a plurality of sub-tables in the shared portion of system memory, each sub-table including a plurality of rules to be used for matching tuples defined by data contained in one or more header fields for the packets;

for each of the plurality of packets,

employ a pre-filter to identify a set of sub-tables from among the plurality of sub-tables to be searched for a tuple match of a tuple for the packet;

perform, using the GPU, parallel flow classification of the packet using a plurality of work items, each work item implementing a search of one or more of the sub-tables in the set of sub-tables for a rule matching the tuple for the packet, the searches implemented by the plurality of work items being performed in parallel; and

classify the packet to a flow corresponding to the rule that matches the tuple for the packet.

120. The system of any of claims 113-119, wherein the inputs that are received include a number of active sub-tables.

121. The system of any of claims 113-120, wherein the application preferences includes a preference to optimize for minimum latency.

122. The system of any of claims 113-121, wherein the inputs that are received include an incoming throughput of packets.

123. One or more non-transitory machine readable mediums, having instructions stored thereon comprising software components configured to be executed on a processor including a plurality of processor cores and having an integrated graphic processing unit (GPU) including a plurality of processing elements, the processor installed in a compute platform including system memory coupled to the processor, wherein, upon execution of the instructions on the processor, the compute platform is enabled to:

implement a plurality of processing models, wherein each of the plurality of processing models employ processing resources on the GPU to perform flow classification of packets using a tuple space search, wherein the tuple space search includes searching a plurality of sub-tables for a rule with a tuple match of a tuple for each of the plurality of packets using at least one level of parallelism;

receive inputs including application preferences;

determine currently available GPU resources; and

select a processing model based on the application preferences in view of the currently available GPU resources.

124. The one or more non-transitory machine readable mediums of claim 123, wherein the plurality of processing models includes a processing model implementing packet-level parallelism with GPU-side table sorting under which a search order of the plurality of sub-tables is periodically re-sorted based on a relative hit-rate of each of the multiple sub-tables.

125. The one or more non-transitory machine readable mediums of claim 123 or 124, wherein the plurality of processing models includes a processing model that performs flow classification of packets using two levels of parallelism, including packet-level parallelism and sub-table level parallelism.

126. The one or more non-transitory machine readable mediums of any of claims 123-125, wherein the plurality of processing models includes a processing model implementing dynamic two-level parallel processing with pre-screening.

127. The one or more non-transitory machine readable mediums of any of claims 123-126, wherein the application preferences includes a preference to optimize for minimum latency.

128. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;

system memory, coupled to the memory controller; and

means for,

implementing a plurality of processing models, wherein each of the plurality of processing models employ processing resources on the GPU to perform flow classification of packets using a tuple space search, wherein the tuple space search includes searching a plurality of sub-tables for a rule with a tuple match of a tuple for each of the plurality of packets using at least one level of parallelism;

receiving inputs including application preferences;

determining currently available GPU resources; and

selecting a processing model based on the application preferences in view of the currently available GPU resources.

129. The system of claim 128, wherein the plurality of processing models includes a processing model implementing packet-level parallelism with GPU-side table sorting under which a search order of the plurality of sub-tables is periodically re-sorted based on a relative hit-rate of each of the multiple sub-tables.

130. The system of claim 129, further comprising means for:

buffering a plurality of packets in a plurality of buffers in memory accessible to each of a the CPU and GPU;

performing, using the GPU, parallel flow classification of the plurality of packets using a plurality of work groups, each work group associated with a respective set of work items and being used to process a respective batch of packets using a batch process;

for each packet processed by a batch process,

performing flow classification of the packet using a work item by matching a tuple defined by fields in a header for the packet with rules in one of a plurality of sub-tables for the work item, wherein the plurality of sub-tables are sequentially searched in a search order;

maintaining one or more hit count histograms, wherein each time a tuple match of a rule in a given sub-table is found, the hit count for that sub-table is incremented; and

employing a hit count histogram to re-sort the search order of the sub-tables for one or more work items.

131. The system of claim 128, wherein the plurality of processing models includes a processing model that performs flow classification of packets using two levels of parallelism, including packet-level parallelism and sub-table level parallelism.

132. The system of claim 131, further comprising means for:

buffering a plurality of packets in a plurality of buffers in a shared portion memory of the system accessible to each of a central processing unit (CPU) and a graphic processing unit (GPU);

storing a plurality of sub-tables in the shared portion of system memory, each sub-table including a plurality of rules to be used for matching tuples defined by data contained in one or more header fields for the packets;

performing parallel flow classification of the plurality of packets using a plurality of work groups, each work group associated with a respective set of work items and being used to process a respective batch of packets using a batch process;

for each packet processed by a batch process,

performing, using the GPU, parallel flow classification of the packet using a plurality of work items, each work item implementing a search of a portion of the sub-tables in the set of sub-tables for a rule matching the tuple for the packet, wherein the work items associated with a work group are organized such that it is possible to search each of the plurality of sub-tables in the set of sub-tables for each packet; and

classifying the packet to a flow corresponding to the rule that matches the tuple for the packet.

133. The system of claim 128, wherein the plurality of processing models includes a processing model implementing dynamic two-level parallel processing with pre-screening.

134. The system of claim 133, further comprising means for:

buffering a plurality of packets in a plurality of buffers in a shared portion of the system memory accessible to each of a central processing unit (CPU) and a graphic processing unit (GPU);

storing a plurality of sub-tables in the shared portion of system memory, each sub-table including a plurality of rules to be used for matching tuples defined by data contained in one or more header fields for the packets;

for each of the plurality of packets,

employing a pre-filter to identify a set of sub-tables from among the plurality of sub-tables to be searched for a tuple match of a tuple for the packet;

performing, using the GPU, parallel flow classification of the packet using a plurality of work items, each work item implementing a search of one or more of the sub-tables in the set of sub-tables for a rule matching the tuple for the packet, the searches implemented by the plurality of work items being performed in parallel; and

classifying the packet to a flow corresponding to the rule that matches the tuple for the packet.

135. The system of any of claims 128-134, wherein the inputs that are received include a number of active sub-tables.

136. The system of any of claims 128-135, wherein the application preferences includes a preference to optimize for minimum latency.

137. The system of any of claims 128-136, wherein the inputs that are received include an incoming throughput of packets.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Italicized letters, such as *'l', 'm', 'n', etc.* in the foregoing detailed description are used to depict an integer number, and the use of a particular letter is not limited to particular embodiments. Moreover, the same letter may be used in separate claims to represent separate integer numbers, or different letters may be used. In addition, use of a particular letter in the detailed description may or may not match the letter used in a claim that pertains to the same subject matter in the detailed description.

As discussed above, various aspects of the embodiments herein may be facilitated by corresponding software and/or firmware components and applications, such as software and/or firmware executed by an embedded processor or the like. Thus, embodiments of this invention may be used as or to support a software program, software modules, firmware, and/or distributed software executed upon some form of processor, processing core or embedded logic a virtual machine running on a processor or core or otherwise implemented or realized upon or within a non-transitory computer-readable or machine-readable storage medium. A non-transitory computer-readable or machine-readable storage medium includes any mechanism for storing or transmitting information in a form readable by a machine (*e.g.*, a computer). For example, a non-transitory computer-readable or machine-readable storage medium includes any mechanism that provides (*i.e.*, stores and/or transmits) information in a form accessible by a computer or computing machine (*e.g.*, computing device, electronic system, *etc.*), such as recordable/non-recordable media (*e.g.*, read only memory (ROM), random access memory (RAM), magnetic disk storage media, optical storage media, flash memory devices, *etc.*). The content may be directly executable ("object" or "executable" form), source code, or difference code ("delta" or "patch" code). A non-transitory computer-readable or machine-readable storage medium may also include a storage or database from which content can be downloaded. The non-transitory computer-readable or machine-readable storage medium may also include a device or product having content stored thereon at a time of sale or delivery. Thus, delivering a device with stored content, or offering content for download over a communication medium may be understood as providing an article of manufacture comprising a non-transitory computer-readable or machine-readable storage medium with such content described herein.

Various components referred to above as processes, servers, or tools described herein may be a means for performing the functions described. The operations and functions performed by various components described herein may be implemented by software running on a processing element, via embedded hardware or the like, or any combination of hardware and software. Such components may be implemented as software modules, hardware modules, special-purpose hardware (*e.g.*, application specific hardware, ASICs, DSPs, *etc.*), embedded controllers, hardwired circuitry, hardware logic, *etc.* Software content (*e.g.*, data, instructions, configuration information, *etc.*) may be provided via an article of manufacture including non-transitory computer-readable or machine-readable storage medium, which provides content that represents instructions that can be executed. The content may result in a computer performing various functions/operations described herein.

As used herein, a list of items joined by the term "at least one of' can mean any combination of the listed terms. For example, the phrase "at least one of A, B or C" can mean A; B; C; A and B; A and C; B and C; or A, B and C.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. A method for performing flow classification, comprising:

   buffering a plurality of packets in a plurality of buffers in memory accessible to each of a central processing unit (CPU) and a graphic processing unit (GPU);

performing, using the GPU, parallel flow classification of the plurality of packets using a plurality of work groups, each work group associated with a respective set of work items and being used to process a respective batch of packets using a batch process;

for each packet processed by a batch process,

performing flow classification of the packet using a work item by matching a tuple defined by fields in a header for the packet with rules in one of a plurality of sub-tables for the work item, wherein the plurality of sub-tables are sequentially searched in a search order;

maintaining one or more hit count histograms, wherein each time a tuple match of a rule in a given sub-table is found, the hit count for that sub-table is incremented; and

using a hit count histogram to re-sort the search order of the sub-tables for one or more work items.

2. The method of claim 1, wherein the method is performed on a processor including a CPU and an integrated GPU.

3. The method of claim 1 or 2, further comprising:

maintaining a global hit count histogram, wherein the global hit count histogram stores an aggregation of hit counts for each sub-table across all of the work items and across all of the work groups.

4. The method of claim 3, further comprising:

storing a local histogram for each work group containing a hit count for each sub-table processed by work items for the work group for a given batch process;

in connection with completing a batch process,

updating the global hit count histogram with the local hit count histogram; and re-setting the local hit count histogram.

5. The method of claim 4, further comprising:

periodically resorting the order of the sub-tables for one or more work items based on a current state of the global hit count histogram.

6. A system comprising:

a processor, having a central processing unit (CPU) including a plurality of processor cores, a graphics processing unit (GPU) having a plurality of processing elements, and a memory controller, the processor further including interconnect circuitry interconnecting the processor cores, GPU, and memory controller;

system memory, coupled to the memory controller;

one or more storage devices having instructions comprising software components stored therein configured to be executed on the processor cores and GPU processing elements, wherein, upon execution, the instructions enable the system to,

buffer a plurality of packets in a plurality of buffers in a shared portion of system memory accessible to each of the CPU and GPU;

perform, via execution of a portion of the instructions on the GPU processing elements, parallel flow classification of the plurality of packets using a plurality of work groups, each work group associated with a respective set of work items and being used to process a respective batch of packets using a batch process;

for each packet processed by a batch process,

perform flow classification of the packet using a work item by matching a tuple defined by fields in a header for the packet with rules in one of a plurality of sub-tables for the work item, wherein the plurality of sub-tables are sequentially searched in a search order;

maintain one or more hit count histograms, wherein each time a tuple match of a rule in a given sub-table is found, the hit count for that sub-table is incremented; and

employ a hit count histogram to re-sort the search order of the sub-tables for one or more work items.

7. The system of claim 6, wherein execution of the instructions further enables the system to:

maintain a global hit count histogram, wherein the global hit count histogram stores an aggregation of hit counts for each sub-table across all of the work items and across all of the work groups.

8. The system of claim 7, wherein execution of the instructions further enables the system to:

store a local histogram for each work group containing a hit count for each sub-table processed by work items for the work group for a given batch process;
in connection with completing a batch process,

update the global hit count histogram with the local hit count histogram; and re-set the local hit count histogram.

9. The system of claim 8, wherein execution of the instructions further enables the system to:

periodically resort the order of the sub-tables for one or more work items based on a current state of the global hit count histogram.

10. The system of any of claims 6-9, wherein, for a given batch process for a given work group, flow classification for at least a portion of packets in the batch is performed in parallel using processing elements on the GPU.

11. One or more non-transitory machine readable mediums, having instructions stored thereon comprising software components configured to be executed on a processor including a plurality of processor cores and having an integrated graphic processing unit (GPU) including a plurality of processing elements, the processor installed in a compute platform including system memory coupled to the processor, wherein, upon execution of the instructions on the processor, the compute platform is enabled to:

buffer a plurality of packets in a plurality of buffers in a shared portion of system memory accessible to each of the CPU and GPU;
perform, via execution of a portion of the instructions on the GPU processing elements, parallel flow classification of the plurality of packets using a plurality of work groups, each work group associated with a respective set of work items and being used to process a respective batch of packets using a batch process;
for each packet processed by a batch process,

perform flow classification of the packet using a work item by matching a tuple defined by fields in a header for the packet with rules in one of a plurality of sub-tables for the work item, wherein the plurality of sub-tables are sequentially searched in a search order;

maintain one or more hit count histograms, wherein each time a tuple match of a rule in a given sub-table is found, the hit count for that sub-table is incremented; and
employ a hit count histogram to re-sort the search order of the sub-tables for one or more work items.

12. The one or more non-transitory machine readable mediums of claim 11, wherein execution of the instructions further enables the compute platform to:

maintain a global hit count histogram, wherein the global hit count histogram stores an aggregation of hit counts for each sub-table across all of the work items and across all of the work groups.

13. The one or more non-transitory machine readable mediums of claim 12, wherein execution of the instructions further enables the compute platform to:

store a local histogram for each work group containing a hit count for each sub-table processed by work items for the work group for a given batch process;
in connection with completing a batch process,

update the global hit count histogram with the local hit count histogram; and re-set the local hit count histogram.

**14.** The one or more non-transitory machine readable mediums of claim 13, wherein execution of the instructions further enables the compute platform to:

periodically resort the order of the sub-tables for one or more work items based on a current state of the global hit count histogram.

**15.** The one or more non-transitory machine readable mediums of any of claims 11-13, wherein, for a given batch process for a given work group, flow classification for all of the packets in the batch is performed in parallel using processing elements on the GPU.

| Flow Mask | 1111 0000 | 1110 0000 | Mask L | Mask N |
|---|---|---|---|---|

Packet Header 100

1111 0000 — 102
1110 0000 — 104
Mask L — 106
Mask N — 108

Rules

1010 XXXX
0011 XXXX
1011 XXXX
— 110

110X XXXX
101X XXXX
111X XXXX
011X XXXX
— 112

Match

01XX XXXX
10XX XXXX
— 114

1XXX XXXX
0XXX XXXX
— 116

*Fig. 1* (Prior Art)

**Fig. 2** *(Prior Art)*

**Fig. 3** *(Prior Art)*

*Fig. 4a*

*Fig. 4b*

*Fig. 4c*

*Fig. 5a*

Fig. 5b

EP 3 493 052 A1

**WorkGroup**

**Work Item #0**
- Pkt#0
- Sub-table #0
- Sub-table #8
- Sub-table #16
- Sub-table #24

**Work Item #1**
- Pkt#1
- Sub-table #0
- Sub-table #8
- Sub-table #16
- Sub-table #24

**Work Item #31**
- Pkt#31
- Sub-table #0
- Sub-table #8
- Sub-table #16
- Sub-table #24

**Work Item #32**
- Pkt#0
- Sub-table #1
- Sub-table #9
- Sub-table #17
- Sub-table #25

**Work Item #33**
- Pkt#1
- Sub-table #1
- Sub-table #9
- Sub-table #17
- Sub-table #25

**Work Item #63**
- Pkt#31
- Sub-table #1
- Sub-table #9
- Sub-table #17
- Sub-table #25

**Work Item #(32*(j-1))**
- Pkt#0
- Sub-table #7
- Sub-table #15
- Sub-table #23
- Sub-table #31

**Work Item #(32*(j-1)+1))**
- Pkt#1
- Sub-table #7
- Sub-table #15
- Sub-table #23
- Sub-table #31

**Work Item #(32*j-1)**
- Pkt#31
- Sub-table #7
- Sub-table #15
- Sub-table #1
- Sub-table #31

*Fig. 5c*

*Fig. 5d*

*Fig. 6*

$x_1$ = hash input

$H_1(x_1) = 26$
$H_2(x_1) = 43$
$H_3(x_1) = 14$

*Fig. 7a* (prior art)

14    26    43

$x_2$ = hit

$H_1(x_2) = 33$
$H_2(x_2) = 11$
$H_3(x_2) = 39$

*Fig. 7b* (prior art)

11    33    39

$x_3$ = miss

$H_1(x_3) = 7$
$H_2(x_3) = 34$
$H_3(x_3) = 17$

7    17    34

*Fig. 7c* (prior art)

Fig. 8a (prior art)

Fig. 8b (prior art)

Fig. 8c (prior art)

Fig. 9a

Packet Header ~100

Mask 1 BF

Mask 2 BF

Mask L BF

Mask N BF

Flow Mask

1111 0000 ~102

1110 0000 ~104

Mask L ~106

Mask N ~108

Rules

1010 XXXX
0011 XXXX
1011 XXXX
~110

110X XXXX
101X XXXX
111X XXXX
011X XXXX
~112

Match

01XX XXXX
10XX XXXX
~114

1XXX XXXX
0XXX XXXX
~116

*Fig. 9b*

Packet Header max. size (512B) 900

H1, H2, H3, H4 ... H*n* 902

Mask 1 BF

Mask 2 BF

Mask L BF

Mask N BF

Flow Mask

| 1111 0000 | 102 | 1110 0000 | 104 | Mask L | 106 | Mask N | 108 |

Rules

| 1010 XXXX | 110X XXXX | | 1XXX XXXX |
| 0011 XXXX | 101X XXXX | 01XX XXXX | 0XXX XXXX |
| 1011 XXXX | 111X XXXX | Match 10XX XXXX | |
| | 011X XXXX | | |

110          112          114          116

*Fig. 9c*

**Fig. 10** *(prior art)*

**Fig. 12**

**Fig. 11**

**Fig. 13**

*Fig. 14*

1400

Begin — 1402

Obtain application preference — 1404

Min. GPU Resource? — 1406
- YES → Use architecture #3 — 1408
- NO ↓

Min. latency? — 1410
- YES → No. of active tables < threshold? — 1412
  - YES → Use architecture #1 — 1414
  - NO → Use architecture #2 — 1416
- NO ↓

Max. throughput? — 1418
- YES → No. of active tables < threshold? — 1420
  - YES → Use architecture #1 — 1422
  - NO → Use architecture #3 — 1424
- NO → Obtain offered throughput — 1426

Offered throughput < threshold_t? — 1428
- YES → (Use architecture #2 path)
- NO → (No. of active tables < threshold? 1420 path)

CPU owns buffer
(producing)
Flag = 0xffff

CPU done producing
Flag = 0x0

**ocl_enqueueMultiBufferToGPU**

**ocl_getNextFreeMultiBufferIndex**

Cpu done consuming
Flag = 0xfff

**ocl_putMultiBuffer**

GPU owns buffer
(producing)
0<= Flag < ctrl_ready_for_cpu

GPU done consuming
Flag = crl_ready_for_cpu

CPU owns buffer
(consuming)
Flag == ctrl_ready_for_cpu

**Ocl_dequeueMultiBufferFromGPU**

*Fig. 15*

**Fig. 16**

1600

PLATFORM HARDWARE

1622 Network

**Fig. 17**

Performance Result Summary

(20 sub-tables, no EMC, no Ericsson Patch)

*Fig. 18*

Europäisches
Patentamt

European
Patent Office

Office européen
des brevets

# EUROPEAN SEARCH REPORT

Application Number

EP 18 20 3901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JANET TSENG ET AL: "Accelerating Open vSwitch with Integrated GPU", KERNEL-BYPASS NETWORKS, ACM, 2 PENN PLAZA, SUITE 701NEW YORKNY10121-0701USA, 9 August 2017 (2017-08-09), pages 7-12, XP058370862, DOI: 10.1145/3098583.3098585 ISBN: 978-1-4503-5053-2 * Abstract and Secs. 1, 2.1, 2.2, 3.1, 3.2 * ----- | 1-15 | INV. G06F8/30 H04L12/851 G06F9/48 ADD. H04L29/06 |
| A | US 2015/244842 A1 (LAUFER RAFAEL P [US] ET AL) 27 August 2015 (2015-08-27) * paragraph [0006] - paragraph [0036]; figures 1, 7, 8 * * paragraph [0040] - paragraph [0048] * ----- | 1-15 | |
| A,D | TSENG JANET ET AL: "Exploiting integrated GPUs for network packet processing workloads", 2016 IEEE NETSOFT CONFERENCE AND WORKSHOPS (NETSOFT), IEEE, 6 June 2016 (2016-06-06), pages 161-165, XP032917852, DOI: 10.1109/NETSOFT.2016.7502464 * the whole document * ----- | 1-15 | TECHNICAL FIELDS SEARCHED (IPC) G06F H04L |

The present search report has been drawn up for all claims

| Place of search | Date of completion of the search | Examiner |
|---|---|---|
| The Hague | 26 February 2019 | Tortelli, Michele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 493 052 A1**

## ANNEX TO THE EUROPEAN SEARCH REPORT
## ON EUROPEAN PATENT APPLICATION NO.

EP 18 20 3901

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2019

| Patent document cited in search report | Publication date | Patent family member(s) | Publication date |
|---|---|---|---|
| US 2015244842 A1 | 27-08-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PFAFF, BEN et al.** The Design and Implementation of Open vSwitch. *NSDI,* 2015

- Exploiting integrated GPUs for network packet processing workloads. **TSENG, JANET et al.** NetSoft Conference and Workshops (NetSoft), 2016 IEEE. IEEE, 2016